# EUROPEAN PATENT APPLICATION

(11) **EP 3 136 768 A1**
(43) Date of publication of application: **01.03.2017**
(21) Application number: 14890363.6
(22) Date of filing: 25.04.2014
(51) Int. Cl.: H04W 16/12

(54) **BASE STATION, USER EQUIPMENT, RESOURCE OBTAINING METHOD AND SYSTEM**

(71) Applicant: Huawei Technologies Co., Ltd., Longgang District Shenzhen, Guangdong 518129 (CN)
(72) Inventor: SHI, Jie, Shenzhen Guangdong 518129 (CN); CHAI, Li, Shenzhen Guangdong 518129 (CN)
(74) Representative: Pfenning, Meinig & Partner mbB
(86) International application number: PCT/CN2014/076295
(87) International publication number: WO 2015/161516

(57) **Abstract**

The present invention provides a base station, user equipment, and a resource obtaining method and system, and relates to the communications field and can ensure normal operation of the user equipment on an available unlicensed resource. The method includes: receiving a first detection result sent by the user equipment, where the first detection result includes signal quality of an unlicensed spectrum in a first preset range and/or spectrum information in the first preset range; obtaining first spectrum information; determining available unlicensed spectrum information according to the first spectrum information obtained by the obtaining unit and/or the first detection result received by the receiving unit; and sending the available unlicensed spectrum information determined by the determining unit to the user equipment. The resource obtaining device, method and system provided in the present invention is used to obtain a resource.

## Description

### TECHNICAL FIELD

The present invention relates to the communications field, and in particular, to a base station, user equipment, and a resource obtaining method and system.

### BACKGROUND

With further evolution of cellular network technologies, especially an LTE (Long Term Evolution, Long Term Evolution) technology, considering limited dedicated spectrum resources for an LTE system, use of unlicensed spectrum resources in the LTE technology starts to be considered now. The spectrum resources may be spectrum resources used for WiFi (Wireless Fidelity, wireless local area network), or resources used in another communications system such as a broadcast television, or idle resources that are not used in a communications system.

In the prior art, a method for obtaining an unlicensed spectrum in an LTE system is a resource contention method applied to WiFi. A base station performs energy detection on an unlicensed spectrum in a period of time. If a result of the energy detection is lower than a preset threshold, it is considered that no signal exists on the unlicensed spectrum. The base station attempts to obtain the unlicensed spectrum, and allocates the unlicensed spectrum to all users of the base station. However, the unlicensed spectrum is allocated by the base station according to a status of the base station, and the unlicensed spectrum may be unable to meet requirements of all user equipments of the base station. Consequently, some user equipments receive relatively weak signals in the unlicensed spectrum, which affects normal operation of the user equipments.

### SUMMARY

Embodiments of the present invention provide a base station, user equipment, and a resource obtaining method and system, which can ensure normal operation of the user equipment on an available unlicensed resource.

To achieve the foregoing objective, the following technical solutions are used in the embodiments of the present invention:

According to a first aspect, a base station is provided, including:
a receiving unit, configured to receive a first detection result sent by user equipment, where the first detection result includes signal quality of an unlicensed spectrum in a first preset range and/or spectrum information in the first preset range;
an obtaining unit, configured to obtain first spectrum information;
a first determining unit, configured to determine available unlicensed spectrum information according to the first spectrum information obtained by the obtaining unit and/or the first detection result received by the receiving unit; and
a sending unit, configured to send the available unlicensed spectrum information determined by the first determining unit to the user equipment.

With reference to the first aspect, in a first possible implementation manner, the available unlicensed spectrum information includes range information of an available unlicensed spectrum and/or a first reference signal in the available unlicensed spectrum.

With reference to the first aspect or the first possible implementation manner, in a second possible implementation manner,
the sending unit is further configured to send first detection configuration information to the user equipment, so that the user equipment detects the unlicensed spectrum in the first preset range according to the first detection configuration information to obtain the first measurement result.

With reference to the second possible implementation manner, in a third possible implementation manner, the first detection configuration information includes a second preset range.

With reference to the second possible implementation manner or the third possible implementation manner, in a fourth possible implementation manner, the signal quality of the unlicensed spectrum includes energy of the unlicensed spectrum or signal quality of a second reference signal in the unlicensed spectrum.

With reference to the fourth possible implementation manner, in a fifth possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the second to the fifth possible implementation manners, in a sixth possible implementation manner, the first detection configuration information further includes a first reporting condition, so that the user equipment sends the first detection result to the base station when the first reporting condition is met, where the first reporting condition includes one or a combination of the following:
the signal quality of the unlicensed spectrum is higher than a first preset threshold,
the signal quality of the unlicensed spectrum is lower than a second preset threshold, or
a detection period is preset.

With reference to the first aspect or the first to the sixth possible implementation manners, in a seventh possible implementation manner,
the first spectrum information includes one or a combination of unlicensed spectrum information of another base station except the base station, unlicensed spectrum information configured by an OAM (Operation And Maintenace, operation, administration and maintenance), or unlicensed spectrum information of WiFi.

With reference to the seventh possible implementation manner, in an eighth possible implementation manner, the first determining unit is specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
select, from the candidate unlicensed spectrum information, spectrum information under a first preset condition as the available unlicensed spectrum information.

With reference to the eighth possible implementation manner, in a ninth possible implementation manner, the first preset condition is spectrum information of highest energy.

With reference to the first aspect or the first to the ninth possible implementation manners, in a tenth possible implementation manner,
the sending unit is further configured to send second detection configuration information to the user equipment, so that the user equipment detects signal quality of a resource section of the available unlicensed spectrum according to the second detection configuration information to obtain a second detection result;
the receiving unit is further configured to receive the second detection result sent by the user equipment; and the base station further includes:
a processing unit, configured to perform scheduling and/or mobility management on the user equipment according to the second detection result.

With reference to the tenth possible implementation manner, in an eleventh possible implementation manner, to perform scheduling and/or mobility management on the user equipment,
the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

With reference to the tenth possible implementation manner, in a twelfth possible implementation manner, the configuration information of the third reference signal includes one or a combination of type information, time-frequency-space code domain information, a sequence format, or sequence-generated parameter information of the third reference signal.

With reference to the tenth to the twelfth possible implementation manners, in a thirteenth possible implementation manner, the sending unit is specifically configured to:
send the second detection configuration information by using one or a combination of RRC (Radio Resource Control, radio resource control protocol) layer signaling, a MAC (Medium Access Control, Medium Access Control) layer control element, a physical layer command, broadcast information, or a system message.

With reference to the eleventh to the thirteenth possible implementation manners, in a fourteenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the fourteenth possible implementation manner, in a fifteenth possible implementation manner, the base station further includes:
a selection unit, configured to select a corresponding transmit power according to one or a combination of the time domain information, the frequency domain information, the time-frequency information, or the time-frequency domain infographics; and
the processing unit includes:
   a determining subunit, configured to determine a first resource section of the available unlicensed spectrum according to the second detection result; and
   a sending subunit, configured to send the first resource section to the user equipment according to the transmit power.

With reference to the tenth to the fifteenth possible implementation manners, in a sixteenth possible implementation manner, the second detection configuration information further includes a second reporting condition, so that the user equipment sends the second detection result to the base station when the second reporting condition is met, where the second reporting condition includes one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

With reference to the sixteenth possible implementation manner, in a seventeenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the sixteenth possible implementation manner, in an eighteenth possible implementation manner, the neighboring cell includes a cell of an unlicensed spectrum that is not used by the user equipment.

With reference to the sixteenth possible implementation manner, in a nineteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the tenth to the nineteenth possible implementation manners, in a twentieth possible implementation manner,
the second detection result includes signal quality information of the resource section in the available unlicensed spectrum, where the signal quality information is used to indicate the signal quality of the resource section; or
the second detection result includes an index value corresponding to signal quality information of the resource section in the available unlicensed spectrum, where the signal quality information is used to indicate the signal quality of the resource section.

With reference to the twentieth possible implementation manner, in a twenty-first possible implementation manner, the determining subunit is specifically configured to:
obtain signal quality under a second preset condition according to the signal quality of the resource section in the available unlicensed spectrum; and
obtain, according to the signal quality under the second preset condition, a resource section that is of the available unlicensed spectrum and corresponding to the signal quality under the second preset condition, and use the resource section as the first resource section of the unlicensed spectrum; or
obtain signal quality under a third preset condition according to the index value corresponding to the signal quality information of the resource section in the available unlicensed spectrum; and
obtain, according to an index value under the third preset condition, a resource section that is of the available unlicensed spectrum and corresponding to the index value under the third preset condition, and use the resource section as the first resource section of the unlicensed spectrum.

With reference to the twenty-first possible implementation manner, in a twenty-second possible implementation manner,
the signal quality is an interference ratio, the second preset condition is an interference ratio range, and the third preset condition is an index value range corresponding to the interference ratio range.

According to a second aspect, user equipment is provided, including:
a first detection unit, configured to detect unlicensed spectrum information in a first preset range according to first detection configuration information to obtain a first detection result, where the first detection result includes signal quality of the unlicensed spectrum and/or spectrum information in the first preset range;
a sending unit, configured to send the first detection result obtained by the first detection unit to a base station, so that the base station determines available unlicensed spectrum information according to first spectrum information and the first detection result after obtaining the first spectrum information; and
a receiving unit, configured to receive the available unlicensed spectrum information sent by the base station.

With reference to the second aspect, in a first possible implementation manner, the available unlicensed spectrum information includes range information of an available unlicensed spectrum and/or a first reference signal in the available unlicensed spectrum.

With reference to the second aspect or the first possible implementation manner, in a second possible implementation manner, the signal quality of the unlicensed spectrum includes energy of the unlicensed spectrum, or signal quality of a second reference signal in the unlicensed spectrum.

With reference to the second possible implementation manner, in a third possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the first to the third possible implementation manners, in a fourth possible implementation manner, the first detection configuration information includes a second preset range.

With reference to the second aspect or the first to the fourth possible implementation manners, in a fifth possible implementation manner, the first detection information further includes a first reporting condition, and
the sending unit is specifically configured to:
send the first detection result to the base station when the first reporting condition is met, where the first reporting condition includes one or a combination of the following:
   the signal quality of the unlicensed spectrum is higher than a first preset threshold,
   the signal quality of the unlicensed spectrum is lower than a second preset threshold, or
   a detection period is preset.

With reference to the fifth possible implementation manner, in a sixth possible implementation manner, the first detection configuration information is configuration information that is preset by the user equipment or configuration information that is preset by the base station.

With reference to the sixth possible implementation manner, in a seventh possible implementation manner, when the first detection configuration information is the configuration information that is preset by the base station,
the receiving unit is further configured to receive the first detection configuration information sent by the base station.

With reference to the second aspect or the first to the seventh possible implementation manners, in an eighth possible implementation manner,
the receiving unit is configured to receive second detection configuration information sent by the base station, where the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and the user equipment further includes:
a second detection unit, configured to detect, according to the second detection configuration information received by the receiving unit, a resource section of the available unlicensed spectrum to obtain a second detection result.

With reference to the eighth possible implementation manner, in a ninth possible implementation manner,
the receiving unit is specifically configured to receive the second detection configuration information that is sent by the base station by using one or a combination of RRC layer signaling, a MAC layer control element, a physical layer command, broadcast information, or a system message.

With reference to the eighth possible implementation manner or the ninth possible implementation manner, in a tenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the eighth to the tenth possible implementation manners, in an eleventh possible implementation manner,
the sending unit is configured to send the second detection result to the base station, so that the base station determines a first resource section in the available unlicensed spectrum according to the second measurement result; and
the receiving unit is configured to receive the first resource section sent by the base station; and the user equipment further includes:
a transmission unit, configured to perform data transmission on the first resource section.

With reference to the eleventh possible implementation manner, in a twelfth possible implementation manner, the second detection configuration information further includes a second reporting condition, and
the sending unit is specifically configured to:
send the second detection result to the base station when the second reporting condition is met, where the second reporting condition includes one or a combination of the following:
   signal quality of a serving cell is higher than a first absolute threshold,
   the signal quality of the serving cell is lower than a second absolute threshold,
   signal quality of a neighboring cell is higher than the signal quality of the serving cell by a preset offset value,
   the signal quality of the neighboring cell is higher than a third absolute threshold,
   the signal quality of the serving cell is lower than a fourth absolute threshold and the signal quality of the neighboring cell is higher than a fifth absolute threshold, or
   the signal quality of the neighboring cell is higher than the signal quality of the serving cell.

With reference to the twelfth possible implementation manner, in a thirteenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the twelfth possible implementation manner, in a fourteenth possible implementation manner, the neighboring cell includes a cell of an unlicensed spectrum that is not used by the user equipment.

With reference to the twelfth possible implementation manner, in a fifteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the eighth to the fifteenth possible implementation manners, in a sixteenth possible implementation manner, when the second detection configuration information includes one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum,
the second detection unit is specifically configured to:
determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detect signal quality of the resource section of the available unlicensed spectrum; and
use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the available unlicensed spectrum according to the second detection result.

With reference to the eighth to the sixteenth possible implementation manners, in a seventeenth possible implementation manner, when the second detection configuration information includes configuration information of the third reference signal,
the second detection unit is specifically configured to:
determine, according to the configuration information of the third reference signal, a resource section that is of the available unlicensed spectrum and in which the third reference signal is located;
detect signal quality of the third reference signal in the resource section of the available unlicensed spectrum; and
use the signal quality of the third reference signal in the resource section of the available unlicensed spectrum as the second detection result, so that the base station determines the first resource section of the available unlicensed spectrum according to the second detection result, or
use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

With reference to the sixteenth possible implementation manner or the seventeenth possible implementation manner, in an eighteenth possible implementation manner, the sending unit is specifically configured to:
send the second configuration result to the base station by using one or a combination of RRC layer signaling, a MAC layer control element, a physical layer command, broadcast information, or a system message of the user equipment.

According to a third aspect, a base station is provided, including:
a receiver, configured to receive a first detection result sent by user equipment, where the first detection result includes signal quality of an unlicensed spectrum in a first preset range and/or spectrum information in the first preset range;
a processor, configured to obtain first spectrum information, where
the processor is further configured to determine available unlicensed spectrum information according to the first spectrum information and/or the first detection result; and
a transmitter, configured to send the available unlicensed spectrum information to the user equipment.

With reference to the third aspect, in a first possible implementation manner, the available unlicensed spectrum information includes range information of an available unlicensed spectrum and/or a first reference signal in the available unlicensed spectrum.

With reference to the third aspect or the first possible implementation manner, in a second possible implementation manner,
the transmitter is further configured to send first detection configuration information to the user equipment, so that the user equipment detects the unlicensed spectrum in the first preset range according to the first detection configuration information to obtain the first measurement result.

With reference to the second possible implementation manner, in a third possible implementation manner, the first detection configuration information includes a second preset range.

With reference to the second possible implementation manner or the third possible implementation manner, in a fourth possible implementation manner, the signal quality of the unlicensed spectrum includes energy of the unlicensed spectrum or signal quality of a second reference signal in the unlicensed spectrum.

With reference to the fourth possible implementation manner, in a fifth possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the second to the fifth possible implementation manners, in a sixth possible implementation manner, the first detection configuration information further includes a first reporting condition, so that the user equipment sends the first detection result to the base station when the first reporting condition is met, where the first reporting condition includes one or a combination of the following:
the signal quality of the unlicensed spectrum is higher than a first preset threshold,
the signal quality of the unlicensed spectrum is lower than a second preset threshold, or
a detection period is preset.

With reference to the third aspect or the first to the sixth possible implementation manners, in a seventh possible implementation manner,
the first spectrum information includes one or a combination of unlicensed spectrum information of another base station except the base station, unlicensed spectrum information configured by an OAM, or unlicensed spectrum information of WiFi.

With reference to the seventh possible implementation manner, in an eighth possible implementation manner, the processor is specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
select, from the candidate unlicensed spectrum information, spectrum information under a first preset condition as the available unlicensed spectrum information.

With reference to the eighth possible implementation manner, in a ninth possible implementation manner, the first preset condition is spectrum information of highest energy.

With reference to the third aspect or the first to the ninth possible implementation manners, the base station further includes the following:
the transmitter is further configured to send second detection configuration information to the user equipment, so that the user equipment detects signal quality of a resource section of the available unlicensed spectrum according to the second detection configuration information to obtain a second detection result;
the receiver is further configured to receive the second detection result sent by the user equipment; and
the processor is further configured to perform scheduling and/or mobility management on the user equipment according to the second detection result.

With reference to the tenth possible implementation manner, in an eleventh possible implementation manner, the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

With reference to the tenth possible implementation manner, in a twelfth possible implementation manner, the configuration information of the third reference signal includes one or a combination of type information, time-frequency-space code domain information, a sequence format, or sequence-generated parameter information of the third reference signal.

With reference to the tenth to the twelfth possible implementation manners, in a thirteenth possible implementation manner, the transmitter is specifically configured to:
send the second detection configuration information by using one or a combination of RRC layer signaling, a MAC layer control element, a physical layer command, broadcast information, or a system message.

With reference to the eleventh to the thirteenth possible implementation manners, in a fourteenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the fourteenth possible implementation manner, in a fifteenth possible implementation manner,
the processor is further configured to select a corresponding transmit power according to one or a combination of the time domain information, the frequency domain information, the time-frequency information, or the time-frequency domain infographics;
the processor is further configured to determine a first resource section of the available unlicensed spectrum according to the second detection result; and
a transmitter, further configured to send the first resource section to the user equipment according to the transmit power.

With reference to the tenth to the fifteenth possible implementation manners, in a sixteenth possible implementation manner, the second detection configuration information further includes a second reporting condition, so that the user equipment sends the second detection result to the base station when the second reporting condition is met, where the second reporting condition includes one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

With reference to the sixteenth possible implementation manner, in a seventeenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the sixteenth possible implementation manner, in an eighteenth possible implementation manner, the neighboring cell includes a cell of an unlicensed spectrum that is not used by the user equipment.

With reference to the sixteenth possible implementation manner, in a nineteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the tenth to the nineteenth possible implementation manners, in a twentieth possible implementation manner, the second detection result includes signal quality information of the resource section in the available unlicensed spectrum, where the signal quality information is used to indicate the signal quality of the resource section; or
the second detection result includes an index value corresponding to signal quality information of the resource section in the available unlicensed spectrum, where the signal quality information is used to indicate the signal quality of the resource section.

With reference to the twentieth possible implementation manner, in a twenty-first possible implementation manner, the processor is specifically configured to:
obtain signal quality under a second preset condition according to the signal quality of the resource section in the available unlicensed spectrum; and
obtain, according to the signal quality under the second preset condition, a resource section that is of the available unlicensed spectrum and corresponding to the signal quality under the second preset condition, and use the resource section as the first resource section of the unlicensed spectrum; or
obtain signal quality under a third preset condition according to the index value corresponding to the signal quality information of the resource section in the available unlicensed spectrum; and
obtain, according to an index value under the third preset condition, a resource section that is of the available unlicensed spectrum and corresponding to the index value under the third preset condition, and use the resource section as the first resource section of the unlicensed spectrum.

With reference to the twenty-first possible implementation manner, in a twenty-second possible implementation manner,
the signal quality is an interference ratio, the second preset condition is an interference ratio range, and the third preset condition is an index value range corresponding to the interference ratio range.

According to a fourth aspect, user equipment is provided, including:
a processor, configured to detect unlicensed spectrum information in a first preset range according to first detection configuration information to obtain a first detection result, where the first detection result includes signal quality of the unlicensed spectrum and/or spectrum information in the first preset range;
a transmitter, configured to send the first detection result to a base station, so that the base station determines available unlicensed spectrum information according to first spectrum information and the first detection result after obtaining the first spectrum information; and
a receiver, configured to receive the available unlicensed spectrum information sent by the base station.

With reference to the fourth aspect, in a first possible implementation manner, the available unlicensed spectrum information includes range information of an available unlicensed spectrum and/or a first reference signal in the available unlicensed spectrum.

With reference to the fourth aspect or the first possible implementation manner, in a second possible implementation manner, the signal quality of the unlicensed spectrum includes energy of the unlicensed spectrum, or signal quality of a second reference signal in the unlicensed spectrum.

With reference to the second possible implementation manner, in a third possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the first to the third possible implementation manners, in a fourth possible implementation manner, the first detection configuration information includes a second preset range.

With reference to the fourth aspect or the first to the fourth possible implementation manners, in a fifth possible implementation manner, the first detection information further includes a first reporting condition, and
the transmitter is specifically configured to:
send the first detection result to the base station when the first reporting condition is met, where the first reporting condition includes one or a combination of the following:
   the signal quality of the unlicensed spectrum is higher than a first preset threshold,
   the signal quality of the unlicensed spectrum is lower than a second preset threshold, or
   a detection period is preset.

With reference to the fifth possible implementation manner, in a sixth possible implementation manner, the first detection configuration information is configuration information that is preset by the user equipment or configuration information that is preset by the base station.

With reference to the sixth possible implementation manner, in a seventh possible implementation manner, when the first detection configuration information is the configuration information that is preset by the base station,
the receiver is further configured to receive the first detection configuration information sent by the base station.

With reference to the fourth aspect or the first to the seventh possible implementation manners, in an eighth possible implementation manner, the user equipment further includes the following:
the receiver is further configured to receive second detection configuration information sent by the base station, where the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and
the processor is further configured to detect a resource section of the available unlicensed spectrum according to the second detection configuration information to obtain a second detection result.

With reference to the eighth possible implementation manner, in a ninth possible implementation manner,
the receiver is further configured to receive the second detection configuration information that is sent by the base station by using one or a combination of RRC layer signaling, a MAC layer control element, a physical layer command, broadcast information, or a system message.

With reference to the eighth possible implementation manner or the ninth possible implementation manner, in a tenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the eighth to the tenth possible implementation manners, in an eleventh possible implementation manner, the user equipment further includes the following:
the transmitter is further configured to send the second detection result to the base station, so that the base station determines a first resource section in the available unlicensed spectrum according to the second measurement result;
the receiver is further configured to receive the first resource section sent by the base station; and
the processor is further configured to perform data transmission on the first resource section.

With reference to the eleventh possible implementation manner, in a twelfth possible implementation manner, the second detection configuration information further includes a second reporting condition, and
the transmitter is specifically configured to:
send the second detection result to the base station when the second reporting condition is met, where the second reporting condition includes one or a combination of the following:
   signal quality of a serving cell is higher than a first absolute threshold,
   the signal quality of the serving cell is lower than a second absolute threshold,
   signal quality of a neighboring cell is higher than the signal quality of the serving cell by a preset offset value,
   the signal quality of the neighboring cell is higher than a third absolute threshold,
   the signal quality of the serving cell is lower than a fourth absolute threshold and the signal quality of the neighboring cell is higher than a fifth absolute threshold, or
   the signal quality of the neighboring cell is higher than the signal quality of the serving cell.

With reference to the twelfth possible implementation manner, in a thirteenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the twelfth possible implementation manner, in a fourteenth possible implementation manner, the neighboring cell includes a cell of an unlicensed spectrum that is not used by the user equipment.

With reference to the twelfth possible implementation manner, in a fifteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the eighth to the fifteenth possible implementation manners, in a sixteenth possible implementation manner, when the second detection configuration information includes one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum,
the processor is specifically configured to:
determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detect signal quality of the resource section of the available unlicensed spectrum; and
use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the available unlicensed spectrum according to the second detection result.

With reference to the eighth to the sixteenth possible implementation manners, in a seventeenth possible implementation manner, when the second detection configuration information includes configuration information of the third reference signal,
the processor is specifically configured to:
determine, according to the configuration information of the third reference signal, a resource section that is of the available unlicensed spectrum and in which the third reference signal is located;
detect signal quality of the third reference signal in the resource section of the available unlicensed spectrum; and
use the signal quality of the third reference signal in the resource section of the available unlicensed spectrum as the second detection result, so that the base station determines the first resource section of the available unlicensed spectrum according to the second detection result, or
use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

With reference to the sixteenth possible implementation manner or the seventeenth possible implementation manner, in an eighteenth possible implementation manner, the transmitter is specifically configured to:
send the second configuration result to the base station by using one or a combination of RRC layer signaling, a MAC layer control element, a physical layer command, broadcast information, or a system message of the user equipment.

According to a fifth aspect, a resource obtaining method is provided, applied to a base station, including:
receiving a first detection result sent by user equipment, where the first detection result includes signal quality of an unlicensed spectrum in a first preset range and/or spectrum information in the first preset range;
obtaining first spectrum information;
determining available unlicensed spectrum information according to the first spectrum information and/or the first detection result; and
sending the available unlicensed spectrum information to the user equipment.

With reference to the fifth aspect, in a first possible implementation manner, the available unlicensed spectrum information includes range information of an available unlicensed spectrum and/or a first reference signal in the available unlicensed spectrum.

With reference to the fifth aspect or the first possible implementation manner, in a second possible implementation manner,
before the receiving a first detection result sent by user equipment, the resource obtaining method further includes:
sending first detection configuration information to the user equipment, so that the user equipment detects the unlicensed spectrum in the first preset range according to the first detection configuration information to obtain the first measurement result.

With reference to the second possible implementation manner, in a third possible implementation manner, the first detection configuration information includes a second preset range.

With reference to the second possible implementation manner or the third possible implementation manner, in a fourth possible implementation manner, the signal quality of the unlicensed spectrum includes energy of the unlicensed spectrum or signal quality of a second reference signal in the unlicensed spectrum.

With reference to the fourth possible implementation manner, in a fifth possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the second to the fifth possible implementation manners, in a sixth possible implementation manner, the first detection configuration information further includes a first reporting condition, so that the user equipment sends the first detection result to the base station according to the first reporting condition, where the first reporting condition includes one or a combination of the following:
the signal quality of the unlicensed spectrum is higher than a first preset threshold,
the signal quality of the unlicensed spectrum is lower than a second preset threshold, or
a detection period is preset.

With reference to the fifth aspect or the first to the sixth possible implementation manners, in a seventh possible implementation manner, the first spectrum information includes one or a combination of unlicensed spectrum information of another base station except the base station, unlicensed spectrum information configured by an OAM, or unlicensed spectrum information of WiFi.

With reference to the seventh possible implementation manner, in an eighth possible implementation manner, the determining available unlicensed spectrum information according to the first spectrum information and/or the first detection result includes:
selecting candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
selecting, from the candidate unlicensed spectrum information, spectrum information under a first preset condition as the available unlicensed spectrum information.

With reference to the eighth possible implementation manner, in a ninth possible implementation manner, the first preset condition is spectrum information of highest energy.

With reference to the fifth aspect or the first to the ninth possible implementation manners, after the sending the available unlicensed spectrum information to the user equipment, the resource obtaining method further includes:
sending second detection configuration information to the user equipment, so that the user equipment detects signal quality of a resource section of the available unlicensed spectrum according to the second detection configuration information to obtain a second detection result;
receiving the second detection result sent by the user equipment; and
performing scheduling and/or mobility management on the user equipment according to the second detection result.

With reference to the tenth possible implementation manner, in an eleventh possible implementation manner,
the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

With reference to the tenth possible implementation manner, in a twelfth possible implementation manner, the configuration information of the third reference signal includes one or a combination of type information, time-frequency-space code domain information, a sequence format, or sequence-generated parameter information of the third reference signal.

With reference to the tenth to the twelfth possible implementation manners, in a thirteenth possible implementation manner, the sending second detection configuration information to the user equipment includes:
sending the second detection configuration information by using one or a combination of RRC layer signaling, a MAC layer control element, a physical layer command, broadcast information, or a system message.

With reference to the eleventh to the thirteenth possible implementation manners, in a fourteenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the fourteenth possible implementation manner, in a fifteenth possible implementation manner,
before the receiving, according to a transmit power, the second detection result sent by the user equipment, the resource obtaining method further includes:
selecting a corresponding transmit power according to one or a combination of the time domain information, the frequency domain information, the time-frequency information, or the time-frequency domain infographics; and
the performing scheduling and/or mobility management on the user equipment according to the second detection result includes:
   determining a first resource section of the available unlicensed spectrum according to the second detection result; and
   sending the first resource section to the user equipment according to the transmit power.

With reference to the tenth to the fifteenth possible implementation manners, in a sixteenth possible implementation manner, the second detection configuration information further includes a second reporting condition, so that the user equipment sends the second detection result to the base station when the second reporting condition is met, where the second reporting condition includes one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

With reference to the sixteenth possible implementation manner, in a seventeenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the sixteenth possible implementation manner, in an eighteenth possible implementation manner, the neighboring cell includes a cell of an unlicensed spectrum that is not used by the user equipment.

With reference to the sixteenth possible implementation manner, in a nineteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the tenth to the nineteenth possible implementation manners, in a twentieth possible implementation manner, the second detection result includes signal quality information of the resource section in the available unlicensed spectrum, where the signal quality information is used to indicate the signal quality of the resource section; or
the second detection result includes an index value corresponding to signal quality information of the resource section in the available unlicensed spectrum, where the signal quality information is used to indicate the signal quality of the resource section.

With reference to the twentieth possible implementation manner, in a twenty-first possible implementation manner, the determining a first resource section of the available unlicensed spectrum according to the second detection result includes:
obtaining signal quality under a second preset condition according to the signal quality of the resource section in the available unlicensed spectrum; and
obtaining, according to the signal quality under the second preset condition, a resource section that is of the available unlicensed spectrum and corresponding to the signal quality under the second preset condition, and using the resource section as the first resource section of the unlicensed spectrum; or
obtaining signal quality under a third preset condition according to the index value corresponding to the signal quality information of the resource section in the available unlicensed spectrum; and
obtaining, according to an index value under the third preset condition, a resource section that is of the available unlicensed spectrum and corresponding to the index value under the third preset condition, and using the resource section as the first resource section of the unlicensed spectrum.

With reference to the twenty-first possible implementation manner, in a twenty-second possible implementation manner,
the signal quality is an interference ratio, the second preset condition is an interference ratio range, and the third preset condition is an index value range corresponding to the interference ratio range.

According to a sixth aspect, a resource obtaining method is provided, applied to user equipment, including:
detecting unlicensed spectrum information in a first preset range according to first detection configuration information to obtain a first detection result, where the first detection result includes signal quality of the unlicensed spectrum and/or spectrum information in the first preset range;
sending the first detection result to a base station, so that the base station determines available unlicensed spectrum information according to first spectrum information and the first detection result after obtaining the first spectrum information; and
receiving the available unlicensed spectrum information sent by the base station.

With reference to the sixth aspect, in a first possible implementation manner, the available unlicensed spectrum information includes range information of an available unlicensed spectrum and/or a first reference signal in the available unlicensed spectrum.

With reference to the sixth aspect or the first possible implementation manner, in a second possible implementation manner, the signal quality of the unlicensed spectrum includes energy of the unlicensed spectrum, or signal quality of a second reference signal in the unlicensed spectrum.

With reference to the second possible implementation manner, in a third possible implementation manner, the first detection configuration information includes configuration information of the second reference signal, and the configuration information of the second reference signal includes one or a combination of type information, time-frequency-space code domain information, a sequence format, or sequence parameter information of the second reference signal.

With reference to the first to the third possible implementation manners, in a fourth possible implementation manner, the first detection configuration information includes a second preset range.

With reference to the sixth aspect or the first to the fourth possible implementation manners, in a fifth possible implementation manner, the first detection information further includes a first reporting condition, and
the sending the first detection result to a base station includes:
sending the first detection result to the base station when the first reporting condition is met, where the first reporting condition includes one or a combination of the following:
   the signal quality of the unlicensed spectrum is higher than a first preset threshold,
   the signal quality of the unlicensed spectrum is lower than a second preset threshold, or
   a detection period is preset.

With reference to the fifth possible implementation manner, in a sixth possible implementation manner, the first detection configuration information is configuration information that is preset by the user equipment or configuration information that is preset by the base station.

With reference to the sixth possible implementation manner, in a seventh possible implementation manner, when the first detection configuration information is the configuration information that is preset by the base station,
before the detecting unlicensed spectrum information in a first preset range according to first detection configuration information to obtain a first detection result, the resource detection method further includes:
receiving the first detection configuration information sent by the base station.

With reference to the sixth aspect or the first to the seventh possible implementation manners, in an eighth possible implementation manner, after the receiving the available unlicensed spectrum information sent by the base station, the resource obtaining method further includes:
receiving second detection configuration information sent by the base station, where the second detection configuration information includes one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and
detecting a resource section of the available unlicensed spectrum according to the second detection configuration information to obtain a second detection result.

With reference to the eighth possible implementation manner, in a ninth possible implementation manner, the receiving second detection configuration information sent by the base station includes:
receiving the second detection configuration information that is sent by the base station by using one or a combination of RRC layer signaling, a MAC layer control element, a physical layer command, broadcast information, or a system message.

With reference to the eighth possible implementation manner or the ninth possible implementation manner, in a tenth possible implementation manner, time-domain indication information is used to indicate either or both of duration information and time determining information of the available unlicensed spectrum, the time determining information is used to indicate whether current time is within time of detecting the available unlicensed spectrum, and the time-domain indication information includes one or a combination of the time-frequency-space code domain information, the time domain information, the time-frequency information, or the time-frequency domain infographics.

With reference to the eighth to the tenth possible implementation manners, in an eleventh possible implementation manner, after the detecting a resource section of the available unlicensed spectrum according to the second detection configuration information to obtain a second detection result, the resource obtaining method further includes:
sending the second detection result to the base station, so that the base station determines a first resource section in the available unlicensed spectrum according to the second measurement result;
receiving the first resource section sent by the base station; and
performing data transmission on the first resource section.

With reference to the eleventh possible implementation manner, in a twelfth possible implementation manner, the second detection configuration information further includes a second reporting condition, and
the sending the second detection result to the base station includes:
sending the second detection result to the base station when the second reporting condition is met, where the second reporting condition includes one or a combination of the following:
   signal quality of a serving cell is higher than a first absolute threshold,
   the signal quality of the serving cell is lower than a second absolute threshold,
   signal quality of a neighboring cell is higher than the signal quality of the serving cell by a preset offset value,
   the signal quality of the neighboring cell is higher than a third absolute threshold,
   the signal quality of the serving cell is lower than a fourth absolute threshold and the signal quality of the neighboring cell is higher than a fifth absolute threshold, or
   the signal quality of the neighboring cell is higher than the signal quality of the serving cell.

With reference to the twelfth possible implementation manner, in a thirteenth possible implementation manner, the serving cell includes a cell of the available unlicensed spectrum and/or a configured cell, and the configured cell is a cell of an unlicensed spectrum configured in the unlicensed spectrum information configured by the OAM.

With reference to the twelfth possible implementation manner, in a fourteenth possible implementation manner, the neighboring cell includes a cell of an unlicensed spectrum that is not used by the user equipment.

With reference to the twelfth possible implementation manner, in a fifteenth possible implementation manner, the first absolute threshold, the second absolute threshold, the third absolute threshold, the fourth absolute threshold, and the fifth absolute threshold are absolute values used to distinguish between different levels of cells of the unlicensed spectrum.

With reference to the eighth to the fifteenth possible implementation manners, in a sixteenth possible implementation manner, when the second detection configuration information includes one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum,
the detecting a resource section of the available unlicensed spectrum according to the second detection configuration information to obtain a second detection result includes:
determining a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detecting signal quality of the resource section of the available unlicensed spectrum; and
using the signal quality of the resource section of the available unlicensed spectrum as the second detection result, or using an index value corresponding to the signal quality of the resource section of the available unlicensed spectrum as the second detection result according to a preset correspondence between an index value and signal quality information, so that the base station determines the first resource section of the available unlicensed spectrum according to the second detection result.

With reference to the eighth to the sixteenth possible implementation manners, in a seventeenth possible implementation manner, when the second detection configuration information includes configuration information of the third reference signal,
the detecting a resource section of the available unlicensed spectrum according to the second detection configuration information to obtain a second detection result includes:
determining, according to the configuration information of the third reference signal, a resource section that is of the available unlicensed spectrum and in which the third reference signal is located;
detecting signal quality of the third reference signal in the resource section of the available unlicensed spectrum; and
using the signal quality of the third reference signal in the resource section of the available unlicensed spectrum as the second detection result, so that the base station determines the first resource section of the available unlicensed spectrum according to the second detection result, or
using an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

With reference to the sixteenth possible implementation manner or the seventeenth possible implementation manner, in an eighteenth possible implementation manner, the sending the second detection result to the base station includes:
sending the second configuration result to the base station by using one or a combination of RRC layer signaling, a MAC layer control element, a physical layer command, broadcast information, or a system message of the user equipment.

According to a seventh aspect, a resource obtaining system is provided, including:
the base station according to the first aspect or the third aspect or any one of the foregoing possible implementation manners; and
the user equipment according to the second aspect or the fourth aspect or any one of the foregoing possible implementation manners.

The present invention provides a base station, user equipment, and a resource obtaining method and system. The method includes: receiving a first detection result sent by the user equipment, where the first detection result includes signal quality of an unlicensed spectrum in a first preset range and/or spectrum information in the first preset range; obtaining first spectrum information; determining available unlicensed spectrum information according to the first spectrum information obtained by the obtaining unit and/or the first detection result received by the receiving unit; and sending the available unlicensed spectrum information determined by the determining unit to the user equipment. In this way, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a base station according to an embodiment of the present invention;
FIG. 2 is a schematic structural diagram of another base station according to an embodiment of the present invention;
FIG. 3 is a schematic structural diagram of a processing unit according to an embodiment of the present invention;
FIG. 4 is a schematic structural diagram of user equipment according to an embodiment of the present invention;
FIG. 5 is a schematic structural diagram of another user equipment according to an embodiment of the present invention;
FIG. 6 is a schematic structural diagram of still another base station according to an embodiment of the present invention;
FIG. 7 is a schematic structural diagram of still another user equipment according to an embodiment of the present invention;
FIG. 8 is a flowchart of a resource obtaining method according to an embodiment of the present invention;
FIG. 9 is a flowchart of another resource obtaining method according to an embodiment of the present invention;
FIG. 10 is a flowchart of another resource obtaining method according to an embodiment of the present invention; and
FIG. 11 is a schematic structural diagram of a resource obtaining system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

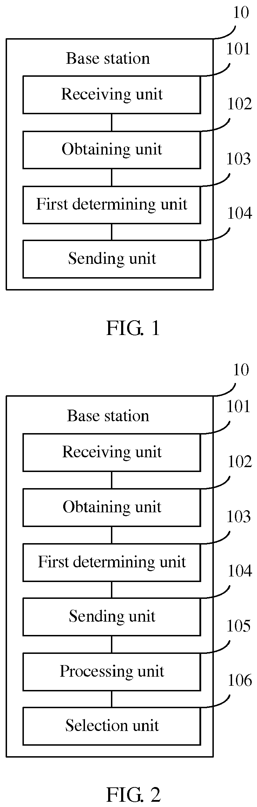

According to one aspect, an embodiment of the present invention provides a base station 10, as shown in FIG. 1. The base station 10 may include:
a receiving unit 101, configured to receive a first detection result sent by user equipment, where the first detection result may include signal quality of an unlicensed spectrum in a first preset range and/or spectrum information in the first preset range;
an obtaining unit 102, configured to obtain first spectrum information;
a first determining unit 103, configured to determine available unlicensed spectrum information according to the first spectrum information obtained by the obtaining unit 102 and/or the first detection result received by the receiving unit 101, where
optionally, the signal quality of the unlicensed spectrum may include energy of the unlicensed spectrum or signal quality of a second reference signal in the unlicensed spectrum; and
a sending unit 104, configured to send the available unlicensed spectrum information determined by the first determining unit 103 to the user equipment.

Optionally, the available unlicensed spectrum information may include range information of an available unlicensed spectrum and/or a first reference signal in the available unlicensed spectrum.

In this way, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

Further, the sending unit 104 may be further configured to send first detection configuration information to the user equipment, so that the user equipment detects the unlicensed spectrum in the first preset range according to the first detection configuration information to obtain the first measurement result. Specifically, the base station may send the first detection configuration information by using one or a combination of RRC layer signaling, a MAC layer control element, a physical layer command, broadcast information, or a system message.

Optionally, the first detection configuration information may include a second preset range, where the second preset range may be the same as the first preset range. Optionally, the first detection configuration information may also include configuration information of the second reference signal, and the configuration information of the second reference signal may include one or a combination of type information, time-frequency-space code domain information, a sequence format, or sequence parameter information of the second reference signal.

It should be noted that the first detection configuration information may further include one or more types of time domain information of the unlicensed spectrum, one or more types of frequency domain information of the unlicensed spectrum, one or more types of time-frequency information of the unlicensed spectrum, and one or more sets of time-frequency domain infographics of the unlicensed spectrum. The unlicensed spectrum is in the first preset range or the second preset range. Time-domain indication information is used to indicate either or both of duration information and time determining information of the unlicensed spectrum. The time determining information is used to indicate whether current time is within time of detecting the unlicensed spectrum. The time-domain indication information may include one or a combination of the time-frequency-space code domain information, the time domain information, the time-frequency information, or the time-frequency domain infographics. The time-frequency-space code domain information may include one or a combination of time domain information, frequency domain information, time-frequency information, or space code information. The duration information may include start time, end time, and a period between the start time and the end time. The current time may include one or a combination of a radio frame, a subframe, or OFDM (Orthogonal Frequency Division Multiplexing, orthogonal frequency division multiplexing technology) symbol duration.

Further, the first detection configuration information may further include a first reporting condition, so that the user equipment sends the first detection result to the base station according to the first reporting condition. Specifically, the first reporting condition may include one or a combination of the following: the signal quality of the unlicensed spectrum is higher than a first preset threshold, the signal quality of the unlicensed spectrum is lower than a second preset threshold, or a detection period is preset.

Further, the first spectrum information may include one or a combination of unlicensed spectrum information of another base station except the base station, unlicensed spectrum information configured by an OAM, or unlicensed spectrum information of WiFi.

Further, the first determining unit 103 may be specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
select, from the candidate unlicensed spectrum information, spectrum information under a first preset condition as the available unlicensed spectrum information.

The first preset condition may be spectrum information of highest energy.

Further, the sending unit 104 may be further configured to send second detection configuration information to the user equipment, so that the user equipment detects signal quality of a resource section of the available unlicensed spectrum according to the second detection configuration information to obtain a second detection result.

The second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal, where the configuration information of the third reference signal may include one or a combination of type information, time-frequency-space code domain information, a sequence format, or sequence-generated parameter information of the third reference signal. Time-domain indication information is used to indicate either or both of duration information and time determining information of the available unlicensed spectrum, the time determining information is used to indicate whether current time is within time of detecting the unlicensed spectrum, and the time-domain indication information may include one or a combination of the time-frequency-space code domain information, the time domain information, the time-frequency information, or the time-frequency domain infographics. The time-frequency-space code domain information may include one or a combination of time domain information, frequency domain information, time-frequency information, or space code information. The duration information may include start time, end time, and a period between the start time and the end time. The current time may include one or a combination of a radio frame, a subframe, or OFDM symbol duration. The unlicensed spectrum may include one or a combination of unused and unlicensed spectrums.

The receiving unit 101 may be further configured to receive the second detection result sent by the user equipment.

Further, as shown in FIG. 2, the base station 10 may further include:
a processing unit 105, configured to perform scheduling and/or mobility management on the user equipment according to the second detection result.

Further, as shown in FIG. 2, the base station 10 may further include:
a selection unit 106, configured to select a corresponding transmit power according to one or a combination of the time domain information, the frequency domain information, the time-frequency information, or the time-frequency domain infographics.

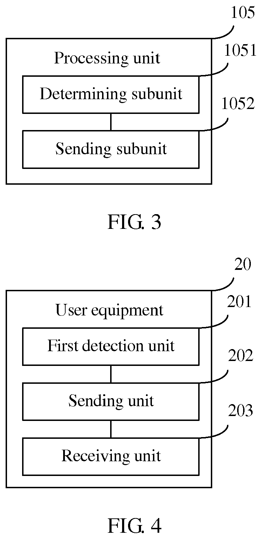

As shown in FIG. 3, the processing unit 105 may further include:
a determining subunit 1051, configured to determine a first resource section of the available unlicensed spectrum according to the second detection result; and
a sending subunit 1052, configured to send the first resource section to the user equipment according to the transmit power.

The second detection configuration information further may include a second reporting condition, so that the user equipment sends the second detection result to the base station when the second reporting condition is met, where the second reporting condition may include one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

Further, the sending unit 104 may be specifically configured to send the second detection configuration information by using one or a combination of RRC layer signaling, a MAC layer control element, a physical layer command, broadcast information, or a system message.

Optionally, the second detection result may include signal quality information of the resource section in the available unlicensed spectrum, where the signal quality information is used to indicate the signal quality of the resource section. Optionally, the second detection result may include an index value corresponding to signal quality information of the resource section in the available unlicensed spectrum, where the signal quality information is used to indicate the signal quality of the resource section.

Correspondingly, the determining subunit 1051 may be specifically configured to:
obtain signal quality under a second preset condition according to the signal quality of the resource section in the available unlicensed spectrum; and
obtain, according to the signal quality under the second preset condition, a resource section that is of the available unlicensed spectrum and corresponding to the signal quality under the second preset condition, and use the resource section as the first resource section of the unlicensed spectrum; or
obtain signal quality under a third preset condition according to the index value corresponding to the signal quality information of the resource section in the available unlicensed spectrum; and
obtain, according to an index value under the third preset condition, a resource section that is of the available unlicensed spectrum and corresponding to the index value under the third preset condition, and use the resource section as the first resource section of the unlicensed spectrum.

Preferably, the signal quality is an interference ratio, the second preset condition is an interference ratio range, and the third preset condition is an index value range corresponding to the interference ratio range.

According to another aspect, an embodiment of the present invention provides user equipment 20, which, as shown in FIG. 4, may include a first detection unit 201, a sending unit 202, and a receiving unit 203.

The first detection unit 201, configured to detect unlicensed spectrum information in a first preset range according to first detection configuration information to obtain a first detection result, where the first detection result may include signal quality of the unlicensed spectrum and/or spectrum information in the first preset range.

Optionally, the first detection configuration information may include a second preset range.

Optionally, the first detection configuration information may also include configuration information of the second reference signal, and the configuration information of the second reference signal may include one or a combination of type information, time-frequency-space code domain information, a sequence format, or sequence parameter information of the second reference signal.

Further, the first detection configuration information may further include one or more types of time domain information of the unlicensed spectrum, one or more types of frequency domain information of the unlicensed spectrum, one or more types of time-frequency information of the unlicensed spectrum, and one or more sets of time-frequency domain infographics of the unlicensed spectrum, where the unlicensed spectrum is in the first preset range or the second preset range. Time-domain indication information is used to indicate either or both of duration information and time determining information of the unlicensed spectrum, the time determining information is used to indicate whether current time is within time of detecting the unlicensed spectrum, and the time-domain indication information may include one or a combination of the time-frequency-space code domain information, the time domain information, the time-frequency information, or the time-frequency domain infographics. The time-frequency-space code domain information may include one or a combination of time domain information, frequency domain information, time-frequency information, or space code information. The duration information may include one or a combination of start time, end time, or a period between the start time and the end time. The current time may include one or a combination of a radio frame, a subframe, or OFDM symbol duration.

The signal quality of the unlicensed spectrum may include energy of the unlicensed spectrum, or signal quality of a second reference signal in the unlicensed spectrum.

The sending unit 202 is configured to send the first detection result obtained by the first detection unit to a base station, so that the base station determines available unlicensed spectrum information according to first spectrum information and the first detection result after obtaining the first spectrum information.

The receiving unit 203 is configured to receive the available unlicensed spectrum information sent by the base station.

The available unlicensed spectrum information may include range information of an available unlicensed spectrum and/or a first reference signal in the available unlicensed spectrum.

In this way, the user equipment detects the unlicensed spectrum in the first preset range according to the first detection configuration information to obtain the first detection result, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

Further, the first detection information may further include a first reporting condition, and the transmit unit 202 is specifically configured to:
send the first detection result to the base station when the first reporting condition is met, where the first reporting condition may include one or a combination of the following: the signal quality of the unlicensed spectrum is higher than a first preset threshold, the signal quality of the unlicensed spectrum is lower than a second preset threshold, or a detection period is preset.

Optionally, the first detection configuration information may be configuration information that is preset by the user equipment or configuration information that is preset by the base station. When the first detection configuration information is the configuration information that is preset by the base station,
the receiving unit 203 is further configured to receive the first detection configuration information sent by the base station.

The receiving unit 203 is configured to receive second detection configuration information sent by the base station, where the second detection configuration information may include one or a combination of multiple types of time domain information of the available unlicensed spectrum, multiple types of frequency domain information of the available unlicensed spectrum, or configuration information of a third reference signal in the available unlicensed spectrum; or the second detection configuration information may include one or more sets of time-frequency domain infographics for the same available unlicensed spectrum. Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics.

Further, the receiving unit 203 is specifically configured to receive the second detection configuration information that is sent by the base station by using one or a combination of RRC layer signaling, a MAC layer control element, a physical layer command, broadcast information, or a system message.

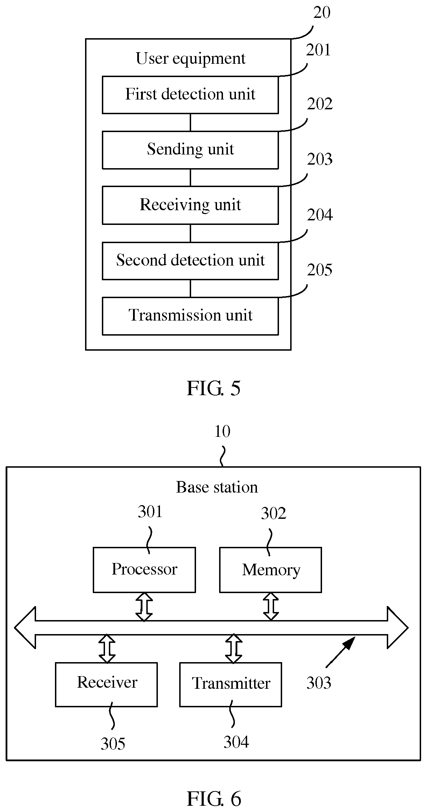

Further, as shown in FIG. 5, the user equipment 20 may further include:
a second detection unit 204, configured to detect, according to the second detection configuration information received by the receiving unit 203, a resource section of the available unlicensed spectrum to obtain a second detection result.

Further, as shown in FIG. 4,
the sending unit 202 is configured to send the second detection result to the base station, so that the base station determines a first resource section in the available unlicensed spectrum according to the second measurement result;
the receiving unit 203 is configured to receive the first resource section sent by the base station; and the user equipment 20 may further include:
a transmission unit 205, configured to perform data transmission on the first resource section.

The second detection configuration information may further include a second reporting condition, and
further, the sending unit 202 is specifically configured to:
send the second detection result to the base station when the second reporting condition is met, where the second reporting condition may include one or a combination of the following:
   signal quality of a serving cell is higher than a first absolute threshold,
   the signal quality of the serving cell is lower than a second absolute threshold,
   signal quality of a neighboring cell is higher than the signal quality of the serving cell by a preset offset value,
   the signal quality of the neighboring cell is higher than a third absolute threshold,
   the signal quality of the serving cell is lower than a fourth absolute threshold and the signal quality of the neighboring cell is higher than a fifth absolute threshold, or
   the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

Further, the second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

Optionally, when the second detection configuration information may include one or a combination of the following: one or more types of time domain information of the available unlicensed spectrum, one or more types of time-frequency information of the available unlicensed spectrum, or one or more sets of time-frequency domain infographics of the available unlicensed spectrum,
the second detection unit 204 is specifically configured to:
determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detect signal quality of the resource section of the available unlicensed spectrum; and
use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the available unlicensed spectrum according to the second detection result.

Optionally, when the second detection configuration information may include configuration information of the third reference signal,
the second detection unit 204 is specifically configured to:
determine, according to the configuration information of the third reference signal, a resource section that is of the available unlicensed spectrum and in which the third reference signal is located;
detect signal quality of the third reference signal in the resource section of the available unlicensed spectrum; and
use the signal quality of the third reference signal in the resource section of the available unlicensed spectrum as the second detection result, so that the base station determines the first resource section of the available unlicensed spectrum according to the second detection result, or
use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

Further, the sending unit 202 is specifically configured to:
send the second configuration result to the base station by using one or a combination of RRC layer signaling, a MAC layer control element, a physical layer command, broadcast information, or a system message of the user equipment.

In this way, the base station can determine the first resource section according to one or a combination of multiple groups of time domain information, multiple groups of frequency domain information, multiple sets of time-frequency domain infographics, or the configuration information of the third reference signal, and obtain a more accurate spectrum resource.

According to still another aspect, FIG. 6 is a schematic structural diagram of still another base station according to an embodiment of the present invention, the base station 10 may include a processor 301, a memory 302, a transmitter 304, a receiver 305, and one or a combination of communications buses 303 used for connecting devices inside the base station 10, where the communications buses are used to implement connection and mutual communication between the devices.

The communications bus 303 may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus 305 may be categorized into an address bus, a data bus, a control bus, and the like.

The memory 302 may include a read-only memory and a random access memory, and provide an instruction and data to the processor 303.

The processor 301 may be a central processing unit (Central Processing Unit, CPU for short), or an application specific integrated circuit (Application Specific Integrated Circuit, ASIC for short), or one or more integrated circuits configured to implement the embodiment of the present invention.

The receiver 305 is configured to receive a first detection result sent by user equipment, where the first detection result may include signal quality of an unlicensed spectrum in a first preset range and/or spectrum information in the first preset range.

Optionally, the signal quality of the unlicensed spectrum may include energy of the unlicensed spectrum or signal quality of a second reference signal in the unlicensed spectrum. Optionally, the first detection configuration information may include a second preset range.

Optionally, the first detection configuration information may include configuration information of the second reference signal, and the configuration information of the second reference signal may include one or a combination of type information, time-frequency-space code domain information, a sequence format, or sequence parameter information of the second reference signal. The first detection configuration information may further include a first reporting condition, so that the user equipment sends the first detection result to the base station when the first reporting condition is met, where the first reporting condition may include one or a combination of the following: the signal quality of the unlicensed spectrum is higher than a first preset threshold, the signal quality of the unlicensed spectrum is lower than a second preset threshold, or a detection period is preset.

The processor 301 is configured to obtain first spectrum information, and determine available unlicensed spectrum information according to the first spectrum information and/or the first detection result.

The transmitter 304 is configured to send the available unlicensed spectrum information to the user equipment. The available unlicensed spectrum information may include range information of an available unlicensed spectrum and/or a first reference signal in the available unlicensed spectrum.

The transmitter 304 may further include: sending first detection configuration information to the user equipment, so that the user equipment detects the unlicensed spectrum in the first preset range according to the first detection configuration information to obtain the first measurement result.

Further, the first spectrum information may include one or a combination of unlicensed spectrum information of another base station except the base station, unlicensed spectrum information configured by an OAM, or unlicensed spectrum information of WiFi.

Further, the processor 301 may be specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
select, from the candidate unlicensed spectrum information, spectrum information under a first preset condition as the available unlicensed spectrum information.

Preferably, the first preset condition is spectrum information of highest energy.

Further, the transmitter 304 may be further configured to send second detection configuration information to the user equipment, so that the user equipment detects signal quality of a resource section of the available unlicensed spectrum according to the second detection configuration information to obtain a second detection result.

The second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal, where the configuration information of the third reference signal may include one or a combination of type information, time-frequency-space code domain information, a sequence format, or sequence-generated parameter information of the third reference signal. Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics. The duration information may include one or a combination of start time, end time, or a period between the start time and the end time. The current time may include one or a combination of a radio frame, a subframe, or OFDM symbol duration. The available unlicensed spectrum may be further extended to an unlicensed spectrum. The unlicensed spectrum may include an unavailable and unlicensed spectrum. The unlicensed spectrum may further include one or a combination of unused and unlicensed spectrums.

The transmitter 304 may be specifically configured to send the second detection configuration information by using one or a combination of RRC layer signaling, a MAC layer control element, a physical layer command, broadcast information, or a system message.

The receiver 305 may be further configured to receive the second detection result sent by the user equipment.

The processor 301 may be further configured to perform scheduling and/or mobility management on the user equipment according to the second detection result.

Further, the processor 301 may be further configured to select a corresponding transmit power according to one or a combination of the time domain information, the frequency domain information, the time-frequency information, or the time-frequency domain infographics.

The processor 302 may be further configured to determine a first resource section according to the second detection result.

The transmitter 304 may be further configured to send the first resource section to the user equipment according to the transmit power.

The second detection configuration information further may include a second reporting condition, so that the user equipment sends the second detection result to the base station when the second reporting condition is met, where the second reporting condition may include one or a combination of the following: signal quality of a serving cell is higher than a first absolute threshold, the signal quality of the serving cell is lower than a second absolute threshold, signal quality of a neighboring cell is higher than the signal quality of the serving cell by a preset offset value, the signal quality of the neighboring cell is higher than a third absolute threshold, the signal quality of the serving cell is lower than a fourth absolute threshold and the signal quality of the neighboring cell is higher than a fifth absolute threshold, or the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

Optionally, the second detection result may include signal quality information of the resource section in the available unlicensed spectrum, where the signal quality information is used to indicate the signal quality of the resource section.

Optionally, the second detection result may include an index value corresponding to signal quality information of the resource section in the available unlicensed spectrum, where the signal quality information is used to indicate the signal quality of the resource section.

The processor 301 may be specifically configured to: obtain signal quality under a second preset condition according to the signal quality of the resource section in the available unlicensed spectrum, and obtain, according to the signal quality under the second preset condition, a resource section that is of the available unlicensed spectrum and corresponding to the signal quality under the second preset condition, and use the resource section as the first resource section of the unlicensed spectrum; or obtain signal quality under a third preset condition according to the index value corresponding to the signal quality information of the resource section in the available unlicensed spectrum, and obtain, according to an index value under the third preset condition, a resource section that is of the available unlicensed spectrum and corresponding to the index value under the third preset condition, and use the resource section as the first resource section of the unlicensed spectrum.

Preferably, the signal quality is an interference ratio, the second preset condition is an interference ratio range, and the third preset condition is an index value range corresponding to the interference ratio range.

In this way, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

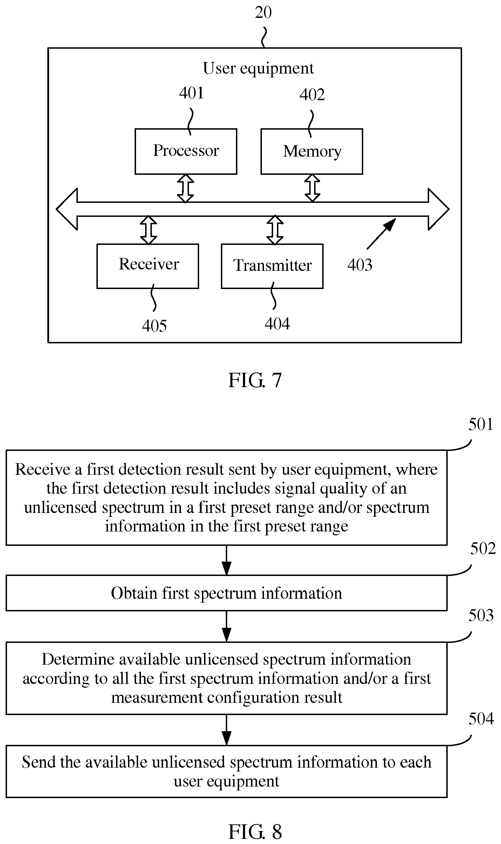

FIG. 7 is a schematic diagram of still another user equipment according to an embodiment of the present invention. As shown in the diagram, the user equipment 20 may include a processor 401, a memory 402, a transmitter 404, a receiver 405, and one or a combination of communications buses 403 used for connecting devices inside the user equipment 20, where the communications buses are used to implement connection and mutual communication between the devices.

The communications bus 403 may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus 405 may be categorized into an address bus, a data bus, a control bus, and the like.

The memory 402 may include a read-only memory and a random access memory, and provide an instruction and data to the processor 403.

The processor 401 may be a central processing unit (Central Processing Unit, CPU for short), or an application specific integrated circuit (Application Specific Integrated Circuit, ASIC for short), or one or more integrated circuits configured to implement the embodiment of the present invention.

The processor 401 is configured to detect unlicensed spectrum information in a first preset range according to first detection configuration information to obtain a first detection result, where the first detection result may include signal quality of the unlicensed spectrum and/or spectrum information in the first preset range.

The transmitter 404 is configured to send the first detection result to a base station, so that the base station determines available unlicensed spectrum information according to first spectrum information and the first detection result after obtaining the first spectrum information.

The receiver 405 is configured to receive the available unlicensed spectrum information sent by the base station.

The available unlicensed spectrum information may include range information of an available unlicensed spectrum and/or a first reference signal in the available unlicensed spectrum. The signal quality of the unlicensed spectrum may include energy of the unlicensed spectrum, or signal quality of a second reference signal in the unlicensed spectrum. The first detection configuration information may include a second preset range; and the first detection configuration information may also include configuration information of the second reference signal, and the configuration information of the second reference signal may include one or a combination of type information, time-frequency-space code domain information, a sequence format, or sequence parameter information of the second reference signal.

The first detection information may further include a first reporting condition, and the transmitter may be specifically configured to:
send the first detection result to the base station when the first reporting condition is met, where the first reporting condition may include one or a combination of the following: the signal quality of the unlicensed spectrum is higher than a first preset threshold, the signal quality of the unlicensed spectrum is lower than a second preset threshold, or a detection period is preset. The first detection configuration information is configuration information that is preset by the user equipment or configuration information that is preset by the base station.

When the first detection configuration information is the configuration information that is preset by the base station,
the receiver 405 may be further configured to receive the first detection configuration information sent by the base station; and receive second detection configuration information sent by the base station, where the second detection configuration information may include one or a combination of the following: multiple types of time domain information of the available unlicensed spectrum, multiple types of frequency domain information of the available unlicensed spectrum, one or more sets of time-frequency domain infographics of the available unlicensed spectrum, or configuration information of a third reference signal in the available unlicensed spectrum.

The processor 401 may be further configured to detect a resource section of the available unlicensed spectrum according to the second detection configuration information to obtain a second detection result.

The receiver 405 may be further configured to receive the second detection configuration information that is sent by the base station by using one or a combination of RRC layer signaling, a MAC layer control element, a physical layer command, broadcast information, or a system message.

Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics.

The transmitter 404 may be further configured to send the second detection result to the base station, so that the base station determines a first resource section in the available unlicensed spectrum according to the second measurement result.

The receiver 405 may be further configured to receive the first resource section sent by the base station.

The processor 401 may be further configured to perform data transmission on the first resource section.

The second detection configuration information may further include a second reporting condition, and the transmitter 404 may be specifically configured to: send the second detection result to the base station when the second reporting condition is met, where the second reporting condition may include one or a combination of the following: signal quality of a serving cell is higher than a first absolute threshold, the signal quality of the serving cell is lower than a second absolute threshold, signal quality of a neighboring cell is higher than the signal quality of the serving cell by a preset offset value, the signal quality of the neighboring cell is higher than a third absolute threshold, the signal quality of the serving cell is lower than a fourth absolute threshold and the signal quality of the neighboring cell is higher than a fifth absolute threshold, or the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

It should be noted that different second detection configuration information corresponds to different second detection results.

Specifically, according to different second detection configuration information, the processor 401 detects a resource section of the available unlicensed spectrum according to the second detection configuration information to obtain a second detection result in either of the following manners:

### First manner:

When the second detection configuration information includes one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum, the processor 401 may be specifically configured to: determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum; detect signal quality of the resource section of the available unlicensed spectrum; and use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the unlicensed spectrum according to the second detection result.

### Second manner:

When the second detection configuration information may include the configuration information of the third reference signal, the processor 401 may be specifically configured to: determine, according to the configuration information of the third reference signal, a resource section that is of the available unlicensed spectrum and in which the third reference signal is located; detect signal quality of the third reference signal in the resource section of the available unlicensed spectrum; and use the signal quality of the third reference signal in the resource section of the available unlicensed spectrum as the second detection result, so that the base station determines the first resource section of the available unlicensed spectrum according to the second detection result, or use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

Further, the transmitter 404 may be specifically configured to: send the second configuration result to the base station by using one or a combination of RRC layer signaling, a MAC layer control element, a physical layer command, broadcast information, or a system message of the user equipment.

In this way, the user equipment detects the unlicensed spectrum in the first preset range according to the first detection configuration information to obtain the first detection result, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

An embodiment of the present invention provides a resource obtaining method, which is applied to a base station, and as shown in FIG. 8, may include:
Step 501: Receive a first detection result sent by user equipment, where the first detection result includes signal quality of an unlicensed spectrum in a first preset range and/or spectrum information in the first preset range.

The signal quality of the unlicensed spectrum may include energy of the unlicensed spectrum, or signal quality of a second reference signal in the unlicensed spectrum. The unlicensed spectrum may include an unused and unlicensed spectrum and/or a used and unlicensed spectrum in the first preset range. Optionally, the first detection configuration information may include a second preset range. Optionally, the first detection configuration information may include configuration information of the second reference signal, and the configuration information of the second reference signal may include one or a combination of type information, time-frequency-space code domain information, a sequence format, or sequence parameter information of the second reference signal. The first detection configuration information may further include a first reporting condition, so that the user equipment sends the first detection result to the base station according to the first reporting condition. The first reporting condition may include at least one of the following: the signal quality of the unlicensed spectrum is higher than a first preset threshold, the signal quality of the unlicensed spectrum is lower than a second preset threshold, or a detection period is preset. Specifically, the first reporting condition may be used to instruct the user equipment to send the first detection result to the base station when the signal quality of the unlicensed spectrum is higher than the first preset threshold and/or when the signal quality of the unlicensed spectrum is lower than the second preset threshold; and/or the first reporting condition is used to instruct the user equipment to send the first detection result to the base station according to the preset detection period.

It should be noted that the first detection configuration information may further include one or more types of time domain information of the unlicensed spectrum, one or more types of frequency domain information of the unlicensed spectrum, one or more types of time-frequency information of the unlicensed spectrum, and one or more sets of time-frequency domain infographics of the unlicensed spectrum, where the unlicensed spectrum is in the first preset range or the second preset range. Time-domain indication information is used to indicate either or both of duration information and time determining information of the unlicensed spectrum, and the time determining information is used to indicate whether current time is within time of detecting the unlicensed spectrum. The time-frequency-space code domain information may include one or a combination of time domain information, frequency domain information, time-frequency information, or space code information. The duration information may include start time, end time, and a period between the start time and the end time. The current time may include one or a combination of a radio frame, a subframe, or OFDM symbol duration.

Step 502: Obtain first spectrum information.

The first spectrum information may include one or a combination of unlicensed spectrum information of another base station except the base station, unlicensed spectrum information configured by an OAM, or unlicensed spectrum information of WiFi.

Step 503: Determine available unlicensed spectrum information according to the first spectrum information and/or the first detection result.

Specifically, the base station may select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result, where the first detection result may be sent by one or more user equipments; and select, from the candidate unlicensed spectrum information, spectrum information under a first preset condition as the available unlicensed spectrum information. The first preset condition may be spectrum information of highest energy, best signal quality, relatively low load, or the like. It should be noted that the second preset range may be the same as the first preset range.

Step 504: Send the available unlicensed spectrum information to the user equipment.

The available unlicensed spectrum information may include range information of an available unlicensed spectrum and/or a first reference signal in the available unlicensed spectrum.

In this way, the base station can determine the available unlicensed spectrum information according to the first spectrum information stored in the base station and/or the first detection result sent by the user equipment, the available unlicensed spectrum information can meet requirements of a majority of users, and the user equipment can receive signals of relatively high quality in the available unlicensed spectrum, thereby ensuring normal operation of the user equipment.

Optionally, the first detection configuration information may be information that is configured by the base station for the user equipment, or information that is configured by the user equipment itself. When the first detection configuration information is configured by the base station, accordingly, before step 501 of the receiving a first detection result sent by user equipment, the resource obtaining method may further include: sending, by the base station, first detection configuration information to the user equipment, so that the user equipment detects the unlicensed spectrum in the first preset range according to the first detection configuration information to obtain the first measurement result. Specifically, the base station sends the first detection configuration information by using one or a combination of RRC layer signaling, a MAC layer control element, a physical layer command, broadcast information, or a system message.

Further, when the base station allocates a more accurate unlicensed spectrum band to the user equipment or the base station reselects the unlicensed spectrum information for the user equipment, after step 504, the resource obtaining method may further include: sending, by the base station, second detection configuration information to the user equipment, so that the user equipment may detect signal quality of a resource section of the available unlicensed spectrum according to the second detection configuration information to obtain a second detection result; receiving, by the base station, the second detection result sent by the user equipment; and then performing scheduling and/or mobility management on the user equipment according to the second detection result. It should be noted that the user equipment may be user equipment that has used an unlicensed spectrum or user equipment that needs to use an unlicensed spectrum.

The second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum. The configuration information of the third reference signal may include one or a combination of type information, time-frequency-space code domain information, a sequence format, or sequence-generated parameter information of the third reference signal. Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics. The available unlicensed spectrum may be further extended to an unlicensed spectrum. The unlicensed spectrum may include an unavailable and unlicensed spectrum. The unlicensed spectrum may further include one or a combination of unused and unlicensed spectrums. Before the receiving the second detection result sent by the user equipment, the resource obtaining method may further include: selecting, by the base station, a corresponding transmit power according to one or a combination of the time domain information, the frequency domain information, the time-frequency information, or the time-frequency domain infographics. In this way, the base station obtains an appropriate transmit power to avoid that interference generated by a WiFi system cannot be detected for the user equipment because a relatively high transmit power is used on a first resource, or avoid that the user equipment cannot detect a signal from the base station because a transmit power is too low. Further, alternatively, the transmit power may be sent by the base station to the user equipment.

Further, the performing scheduling and/or mobility management on the user equipment according to the second detection result may include: determining, by the base station, a first resource section of the available unlicensed spectrum according to the second detection result; and sending the first resource section to the user equipment according to the transmit power.

Further, the sending second detection configuration information to the user equipment may include:
sending the second detection configuration information by using one or a combination of RRC layer signaling, a MAC layer control element, a physical layer command, broadcast information, or a system message.

It should be noted that the available unlicensed spectrum information may include unlicensed spectrum information of a serving cell in which the user equipment is located.

The second detection configuration information further may include a second reporting condition, so that the user equipment sends the second detection result to the base station when the second reporting condition is met, where the second reporting condition may include one or a combination of the following: signal quality of a serving cell is higher than a first absolute threshold, the signal quality of the serving cell is lower than a second absolute threshold, signal quality of a neighboring cell is higher than the signal quality of the serving cell by a preset offset value, the signal quality of the neighboring cell is higher than a third absolute threshold, the signal quality of the serving cell is lower than a fourth absolute threshold and the signal quality of the neighboring cell is higher than a fifth absolute threshold, or the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

The second detection result may include signal quality information of the resource section in the available unlicensed spectrum information, where the signal quality information is used to indicate the signal quality of the resource section; or, the second detection result may include an index value corresponding to signal quality information of the resource section in the available unlicensed spectrum information, where the signal quality information is used to indicate the signal quality of the resource section.

Accordingly, the determining a first resource section of the available unlicensed spectrum according to the second detection result may include: obtaining, by the base station according to the signal quality of the resource section in the available unlicensed spectrum information, signal quality under a second preset condition, and according to the signal quality under the second preset condition, obtaining a resource section that is of the available unlicensed spectrum and corresponding to the signal quality under the second preset condition and using the resource section as the first resource section of the unlicensed spectrum; or, obtaining, according to an index value corresponding to the signal quality information of the resource section in the available unlicensed spectrum information, signal quality under a third preset condition, and according to an index value under the third preset condition, obtaining a resource section that is of the available unlicensed spectrum and corresponding to the index value under the third preset condition and using the resource section as the first resource section of the unlicensed spectrum. Preferably, the signal quality may be an interference ratio, the second preset condition is an interference ratio range, and the third preset condition is an index value range corresponding to the interference ratio range.

In this way, the user equipment detects the available unlicensed spectrum according to the second detection configuration information to obtain a second detection result. The second detection configuration information may include one or a combination of the following: one or more types of time domain information, one or more types of frequency domain information, one or more types of time-frequency information, or one or more sets of time-frequency domain infographics of the available unlicensed spectrum. The base station can determine the first resource section according to the second detection result, and then the first resource section can meet requirements of users. All user equipments can receive signals of relatively high quality in the available unlicensed spectrum, thereby ensuring normal operation of the user equipment.

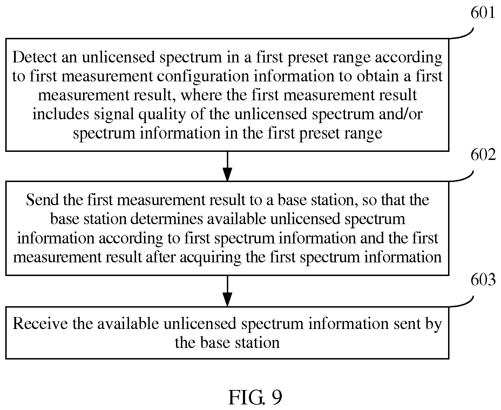

According to still another aspect, an embodiment of the present invention provides a resource obtaining method, which is applied to user equipment, and as shown in FIG. 9, may include:
Step 601: Detect an unlicensed spectrum in a first preset range according to first detection configuration information to obtain a first detection result, where the first detection result may include signal quality of the unlicensed spectrum and/or spectrum information in the first preset range.

The first detection configuration information may include a second preset range; and the first detection configuration information may also include configuration information of the second reference signal, and the configuration information of the second reference signal may include one or a combination of type information, time-frequency-space code domain information, a sequence format, or sequence parameter information of the second reference signal.

The first detection information may further include a first reporting condition, and the sending the first detection result to a base station may include: sending, by the user equipment, the first detection result to the base station when the first reporting condition is met, where the first reporting condition may include one or a combination of the following: the signal quality of the unlicensed spectrum is higher than a first preset threshold, the signal quality of the unlicensed spectrum is lower than a second preset threshold, or a detection period is preset. Specifically, the first preset condition is used to instruct the user equipment to send the first detection result to the base station when the signal quality of the unlicensed spectrum is higher than the first preset threshold and/or when the signal quality of the unlicensed spectrum is lower than the second preset threshold; or the first reporting condition is used to instruct the user equipment to send the first detection result to the base station according to the preset detection period.

The signal quality of the unlicensed spectrum may include energy of the unlicensed spectrum, or signal quality of a second reference signal in the unlicensed spectrum. The configuration information of the second reference signal may include one or a combination of type information, time-frequency-space code domain information, a sequence format, or sequence parameter information of the second reference signal.

Further, when the first detection configuration information is configuration information that is preset by the base station, before step 601, the resource detection method may further include: receiving, by the user equipment, the first detection configuration information sent by the base station. Specifically, the user equipment may receive the second detection configuration information that is sent by the base station by using one or a combination of RRC layer signaling, a MAC layer control element, a physical layer command, broadcast information, or a system message. Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics. The duration information may include one or a combination of start time, end time, or a period between the start time and the end time. The current time may include one or a combination of a radio frame, a subframe, or OFDM symbol duration. The available unlicensed spectrum may be further extended to an unlicensed spectrum. The unlicensed spectrum may include an unavailable and unlicensed spectrum. The unlicensed spectrum may further include one or a combination of unused and unlicensed spectrums.

Step 602: Send the first detection result to a base station, so that the base station determines available unlicensed spectrum information according to first spectrum information and the first detection result after obtaining the first spectrum information.

Step 603: Receive the available unlicensed spectrum information sent by the base station.

The available unlicensed spectrum information may include range information of an available unlicensed spectrum and/or a first reference signal in the available unlicensed spectrum.

In this way, the user equipment detects the unlicensed spectrum in the first preset range according to the first detection configuration information to obtain the first detection result, the base station can determine the available unlicensed spectrum information according to the first spectrum information stored in the base station and/or the first detection result, the available unlicensed spectrum information can meet requirements of users, and all user equipments can receive signals of relatively high quality in the available unlicensed spectrum, thereby ensuring normal operation of the user equipment.

It should be noted that the first detection configuration information may be configuration information that is preset by the user equipment or configuration information that is preset by the base station. The first preset range may be an unlicensed spectrum range that is preset by the user equipment or an unlicensed spectrum range that is preset by the base station.

Further, after step 603, the resource obtaining method may further include:
receiving, by the user equipment, second detection configuration information sent by the base station, where the second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum information, or configuration information of a third reference signal in the available unlicensed spectrum.

Further, after the detecting a resource section of the available unlicensed spectrum according to the second detection configuration information to obtain a second detection result, the resource obtaining method may further include: sending, by the user equipment, the second detection result to the base station, so that the base station determines a first resource section in the available unlicensed spectrum information according to the second measurement result.

Further, after the user equipment may send the second detection result to the base station, optionally, if the base station can determine the first resource section, the resource obtaining method may further include: receiving, by the user equipment, the first resource section sent by the base station, and performing data transmission on the first resource section.

The range information of the available unlicensed spectrum may further include an unlicensed spectrum of a serving cell in which the user equipment is located, and/or an unlicensed spectrum of a neighboring cell. The second reporting condition may include one or a combination of the following: signal quality of a serving cell is higher than a first absolute threshold, the signal quality of the serving cell is lower than a second absolute threshold, signal quality of a neighboring cell is higher than the signal quality of the serving cell by a preset offset value, the signal quality of the neighboring cell is higher than a third absolute threshold, the signal quality of the serving cell is lower than a fourth absolute threshold and the signal quality of the neighboring cell is higher than a fifth absolute threshold, or the signal quality of the neighboring cell is higher than the signal quality of the serving cell.

The serving cell may include a cell of the available unlicensed spectrum and/or a configured cell, the serving cell may further include a cell of an available licensed spectrum, and the configured cell is a cell of an unlicensed spectrum configured in the unlicensed spectrum information configured by the OAM. The neighboring cell may include a cell of an unlicensed spectrum that is not used by the user equipment, or the neighboring cell may be a cell except the serving cell, in which an unoccupied and unlicensed spectrum exists. The first absolute threshold, the second absolute threshold, the third absolute threshold, the fourth absolute threshold, and the fifth absolute threshold are absolute values used to distinguish between different levels of cells of the unlicensed spectrum.

It should be noted that different second detection configuration information corresponds to different second detection results.

Specifically, according to different second detection configuration information, a method for detecting a resource section of the available unlicensed spectrum according to the second detection configuration information to obtain a second detection result may include either of the following manners:

### First manner:

When the second detection configuration information includes one or a combination of the following: one or more types of time domain information of the available unlicensed spectrum, one or more types of frequency domain information of the available unlicensed spectrum, or one or more types of time-frequency information of the available unlicensed spectrum, the detecting a resource section of the available unlicensed spectrum according to the second detection configuration information to obtain a second detection result may include: determining, by the user equipment, a to-be-detected resource section of the available unlicensed spectrum according to one or a combination of the following: one or more types of time domain information of the available unlicensed spectrum, one or more types of frequency domain information of the available unlicensed spectrum, or one or more types of time-frequency information of the available unlicensed spectrum; detecting signal quality of the resource section of the available unlicensed spectrum; and using the signal quality of the resource section of the available unlicensed spectrum as the second detection result, or using an index value corresponding to the signal quality of the resource section of the available unlicensed spectrum as the second detection result according to a preset correspondence between an index value and signal quality information, so that the base station determines the first resource section of the available unlicensed spectrum according to the second detection result.

### Second manner:

When the second detection configuration information may include the configuration information of the third reference signal, the detecting a resource section of the available unlicensed spectrum according to the second detection configuration information to obtain a second detection result may include: determining, by the user equipment according to the configuration information of the third reference signal, a resource section that is of the available unlicensed spectrum and in which the third reference signal is located; detecting signal quality of the third reference signal in the resource section of the available unlicensed spectrum; and using the signal quality of the third reference signal in the resource section of the available unlicensed spectrum as the second detection result, so that the base station determines the first resource section of the available unlicensed spectrum according to the second detection result, or using an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

Further, the sending the second detection result to a base station may include: sending, by the user equipment, the second configuration result to the base station by using one or a combination of RRC layer signaling, a MAC layer control element, a physical layer command, broadcast information, or a system message of the user equipment.

In this way, the user equipment detects the available unlicensed spectrum according to the second detection configuration information to obtain the second detection result, where the second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or the configuration information of the third reference signal in the available unlicensed spectrum, and the base station can determine the first resource section according to the second detection result. The first resource section can meet requirements of users, and all user equipments can receive signals of relatively high quality in the available unlicensed spectrum, thereby ensuring normal operation of the user equipment.

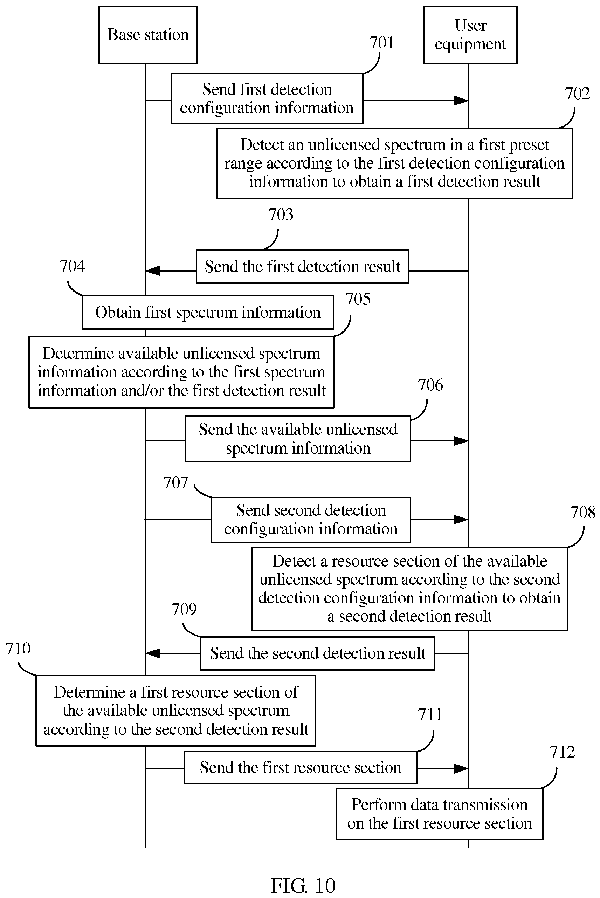

According to still another aspect, an embodiment of the present invention provides another resource obtaining method. The resource obtaining method shown in FIG. 7 is elaborated below by using an example in which user equipment can use an unlicensed spectrum to transmit information in an LTE system and first detection configuration information is preset by a base station. As shown in FIG. 10, the method may include:
Step 701: The base station sends first detection configuration information to the user equipment.

The user equipment may be one or more user equipments that have used an unlicensed spectrum or one or more user equipments that need to use an unlicensed spectrum.

The first detection configuration information may include a second preset range and/or configuration information of a second reference signal, where the second reference signal is a signal in an unlicensed spectrum in a first preset range. The configuration information of the second reference signal may include one or a combination of type information, time-frequency-space code domain information, a sequence format, and sequence parameter information of the second reference signal, or the configuration information is used to distinguish the second reference signal from other signals. The first detection configuration information may further include a first reporting condition, and the user equipment sends a first detection result to the base station according to the first reporting condition.

The first detection information may also include one or more types of time domain information of the unlicensed spectrum, one or more types of frequency domain information of the unlicensed spectrum, one or more types of time-frequency information of the unlicensed spectrum, and one or more sets of time-frequency domain infographics of the unlicensed spectrum. Time-domain indication information is used to indicate either or both of duration information and time determining information of the unlicensed spectrum, the time determining information is used to indicate whether current time is within time of detecting the unlicensed spectrum, and the time-domain indication information may include one or a combination of the time-frequency-space code domain information, the time domain information, the time-frequency information, or the time-frequency domain infographics. The duration information may include one or a combination of start time, end time, or a period between the start time and the end time. The current time may include one or a combination of a radio frame, a subframe, or OFDM symbol duration.

It should be noted that the first detection configuration information may be configuration information that is preset by the user equipment or configuration information that is preset by the base station. The first detection configuration information in the resource obtaining method provided in this embodiment is the configuration information that is preset by the base station, the first preset range may be an unlicensed spectrum range that is preset by the user equipment or an unlicensed spectrum range that is preset by the base station, and the first preset range and the second preset range may be the same range.

Step 702: The user equipment detects an unlicensed spectrum in a first preset range according to the first detection configuration information to obtain a first detection result.

The first detection result may include signal quality of the unlicensed spectrum and/or spectrum information in the first preset range. The first detection result may include the signal quality of the unlicensed spectrum. The first detection result may include signal quality of the second reference signal in the unlicensed spectrum.

Step 703: The user equipment sends a first detection result to the base station.

The user equipment may send the first detection result to the base station according to a first reporting condition, where the first reporting condition may include one or a combination of the following: the signal quality of the unlicensed spectrum is higher than a first preset threshold, the signal quality of the unlicensed spectrum is lower than a second preset threshold, or a detection period is preset. Specifically, when the signal quality of the unlicensed spectrum is higher than the first preset threshold, the user equipment sends the first detection result to the base station, and/or when the signal quality of the unlicensed spectrum is lower than the second preset threshold, the user equipment sends the first detection result to the base station, and/or the user equipment sends the first detection result to the base station according to the preset detection period. The foregoing three scenarios are decided by a base station side according to multiple factors such as a current environment.

Step 704: The base station obtains first spectrum information.

The first spectrum information may include one or a combination of unlicensed spectrum information of another base station except the base station, unlicensed spectrum information configured by an OAM, or unlicensed spectrum information of WiFi.

Step 705: The base station determines available unlicensed spectrum information according to the first spectrum information and/or the first detection result.

Specifically, the base station may select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result, and select, from the candidate unlicensed spectrum information, spectrum information under a first preset condition as the available unlicensed spectrum information. The first preset condition may be spectrum information of highest energy. The available unlicensed spectrum information may include range information of an available unlicensed spectrum and/or a first reference signal in the available unlicensed spectrum.

Step 706: The base station sends the available unlicensed spectrum information to the user equipment.

When the available unlicensed spectrum information may include the range information of the available unlicensed spectrum, the user equipment may transmit information directly by using the available unlicensed spectrum; and when the available unlicensed spectrum information is in the first reference signal in the available unlicensed spectrum, the user equipment may, after receiving the first reference signal, transmit information by using the available unlicensed spectrum in which the first reference signal is located.

Step 707: The base station sends second detection configuration information to the user equipment.

The second detection configuration information may include one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal of the available unlicensed spectrum, where the configuration information of the third reference signal may include one or a combination of type information, time-frequency-space code domain information, a sequence format, or sequence-generated parameter information of the third reference signal. The second detection configuration information may be sent by the base station by using one or a combination of RRC layer signaling, a MAC layer control element, a physical layer command, broadcast information, or a system message. Time-domain indication information is used to indicate either or both of duration information and time determining information of the available unlicensed spectrum, the time determining information is used to indicate whether current time is within time of detecting the available unlicensed spectrum, and the time-domain indication information may include one or a combination of the time-frequency-space code domain information, the time domain information, the time-frequency information, or the time-frequency domain infographics. The duration information may include one or a combination of start time, end time, or a period between the start time and the end time. The current time may include one or a combination of a radio frame, a subframe, or OFDM symbol duration. The available unlicensed spectrum may be further extended to an unlicensed spectrum. The unlicensed spectrum may include an unavailable and unlicensed spectrum. The unlicensed spectrum may further include one or a combination of unused and unlicensed spectrums.

It should be noted that the second configuration information may not only include the available unlicensed spectrum information, but may also include information about a cell in which the available unlicensed spectrum exists.

Because the range information of the available unlicensed spectrum may include an unlicensed spectrum of a serving cell in which the user equipment is located and/or an unlicensed spectrum of a neighboring cell, the second detection configuration information may further include a second reporting condition, so that the user equipment sends a second detection result to the base station when the second reporting condition is met, where the second reporting condition may include one or a combination of the following: signal quality of a serving cell is higher than a first absolute threshold, the signal quality of the serving cell is lower than a second absolute threshold, signal quality of a neighboring cell is higher than the signal quality of the serving cell by a preset offset value, the signal quality of the neighboring cell is higher than a third absolute threshold, the signal quality of the serving cell is lower than a fourth absolute threshold and the signal quality of the neighboring cell is higher than a fifth absolute threshold, or the signal quality of the neighboring cell is higher than the signal quality of the serving cell. The serving cell may include a cell of the available unlicensed spectrum and/or a configured cell, and the configured cell is a cell of the unlicensed spectrum in the unlicensed spectrum information configured by an OAM, and the neighboring cell may include a cell of an unlicensed spectrum outside the first preset range.

Step 708: The user equipment detects a resource section of the available unlicensed spectrum according to the second detection configuration information to obtain a second detection result.

Different second detection configuration information causes different specific methods.

Optionally, when the second detection configuration information may include one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum, the user equipment may determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum, and detect the signal quality of the resource section of the available unlicensed spectrum; the user equipment may use the signal quality of the resource section of the available unlicensed spectrum as the second detection result, or the user equipment may use an index value corresponding to the signal quality of the resource section of the available unlicensed spectrum as the second detection result according to a preset correspondence between an index value and signal quality information. For example, the time domain information may include a pattern identifier and/or a pattern granularity, where the granularity may be an OFDM symbol and/or multiple types of subframes.

Optionally, when the second detection configuration information may include the configuration information of the third reference signal, the user equipment may determine, according to the configuration information of the third reference signal, a resource section that is of the available unlicensed spectrum and in which the third reference signal is located, and detect the signal quality of the third reference signal in the resource section of the available unlicensed spectrum. The user equipment may use the signal quality of the third reference signal in the available unlicensed spectrum as the second detection result, or the user equipment may use an index value corresponding to the signal quality of the third reference signal in the available unlicensed spectrum as the second detection result according to a preset correspondence between an index value and signal quality information.

Step 709: The user equipment sends a second detection result to the base station.

The user equipment may send the second detection result to the base station according to the second preset condition. Specifically, the user equipment may send the second detection result to the base station when signal quality of a serving cell is higher than a first absolute threshold; the user equipment may send the second detection result to the base station when the signal quality of the serving cell is lower than a second absolute threshold; the user equipment may send the second detection result to the base station when signal quality of a neighboring cell is higher than the signal quality of the serving cell by a preset offset value; the user equipment may send the second detection result to the base station when signal quality of the neighboring cell is higher than a third absolute threshold; the user equipment may send the second detection result to the base station when the signal quality of the serving cell is lower than a fourth absolute threshold and the signal quality of the neighboring cell is higher than a fifth absolute threshold; and the user equipment may send the second detection result to the base station when the signal quality of the neighboring cell is higher than the signal quality of the serving cell. The serving cell may be a cell of the available unlicensed spectrum and/or a configured cell, and the configured cell is a cell of an unlicensed spectrum configured in the unlicensed spectrum information configured by the OAM. It should be noted that the base station may send the second configuration result to the base station by using one or a combination of RRC layer signaling, a MAC layer control element, a physical layer command, broadcast information, or a system message of the user equipment.

Step 710: The base station determines a first resource section of the available unlicensed spectrum according to the second detection result.

It is assumed that the signal quality information is an interference ratio, and the second preset condition is an interference ratio less than 1. When the second measurement result is an interference ratio of the available unlicensed spectrum, the base station may obtain an interference ratio less than 1 according to an interference ratio of the resource section in the available unlicensed spectrum, obtain a resource section that is of the available unlicensed spectrum and corresponding to the interference ratio less than 1, and use the resource section as the first resource section of the unlicensed spectrum. Alternatively, when the signal quality information is an index value corresponding to the interference ratio and the third preset condition is an index value less than 1, the base station may, according to an index value corresponding to an interference ratio of the resource section in the available unlicensed spectrum, obtain an index value less than 1, obtain a resource section that is of the available unlicensed spectrum and corresponding to the index value less than 1, and use the resource section as the first resource section of the unlicensed spectrum. In addition, the base station selects an appropriate power according to the second measurement result of the user equipment to avoid that the user equipment cannot detect a signal because a relatively high transmit power is used on the first resource section.

Step 711: The base station sends the first resource section to the user equipment.

The base station sends the first resource section according to a transmit power. The transmit power is determined according to the time domain information, the frequency domain information, the time-frequency information, and the one or more sets of time-frequency domain infographics in the second detection configuration information.

Step 712: The user equipment performs data transmission on the first resource section.

This embodiment of the present invention provides a resource obtaining method, which may include the following: the user equipment detects the energy of the unlicensed spectrum in the first preset range according to the first detection configuration information sent by the base station, and obtains and sends the first detection result to the base station, the base station obtains the available unlicensed spectrum information according to the first detection result and the first spectrum information, and the base station sends the second detection configuration information to the user equipment, the user equipment detects the resource section of the available unlicensed spectrum according to the second detection configuration information, and obtains and sends the second detection result to the base station, and the base station obtains the first resource section according to the second detection result. In this way, the user equipment detects the available unlicensed spectrum according to the second detection configuration information to obtain the second detection result, where the second detection configuration information may include one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, and the configuration information of the third reference signal in the available unlicensed spectrum, and the base station can determine the first resource section according to the second detection result. The first resource section can meet requirements of users, and all user equipments can receive signals of relatively high quality in the available unlicensed spectrum, thereby ensuring normal operation of the user equipment.

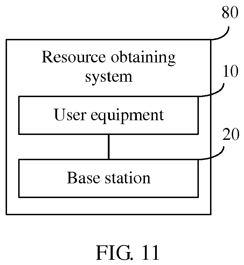

According to still another aspect, an embodiment of the present invention provides a resource obtaining system 80, which, as shown in FIG. 11, includes:
any of the foregoing base stations 10; and
any of the foregoing user equipments 20.

The base station 10 may be specifically configured to receive a first detection result sent by the user equipment, where the first detection result includes signal quality of an unlicensed spectrum in a first preset range and/or spectrum information in the first preset range; obtain first spectrum information; determine available unlicensed spectrum information according to the first spectrum information and/or the first detection result; and send the available unlicensed spectrum information to the user equipment.

The user equipment 20 is configured to detect unlicensed spectrum information in the first preset range according to first detection configuration information to obtain the first detection result, where the first detection result includes the signal quality of the unlicensed spectrum and/or the spectrum information in the first preset range; send the first detection result to the base station, so that the base station determines the available unlicensed spectrum information according to the first spectrum information and the first detection result after obtaining the first spectrum information; and receive the available unlicensed spectrum information sent by the base station.

The signal quality mentioned in all the embodiments of the present invention may be defined based on a reference signal including one or more reference signals such as a CRS (Cell-specific Reference Signal, cell-specific reference signal), a DMRS (Demodulation Reference Signal, demodulation reference signal), a DRS (Discovery Reference Signal, discovery reference signal), a TRS (Tracking Reference Signal, tracking reference signal), a reduced CRS, a CSI-RS (Channel Status Information Reference Signal, channel status information-reference signal), and an SRS (Sounding Reference Signal, sounding reference signal), which is not limited in the present invention. Alternatively, the signal quality mentioned in the embodiments of the present invention may refer to signal quality of a radio link in a cell, for example, signal quality of a remote unit in a cell, or signal quality at one or more radio ports in a cell, or a combination thereof. That signal quality is higher than or lower than or equal to a threshold, or signal quality is higher than or lower than or equal to another signal quality, which is mentioned in all embodiments of the present invention, may specifically indicate that signal quality at any sampling time point in a period of time, or at multiple sampling time points in a period of time, or at all sampling time points, or of a sampling statistical value in a period of time is higher than or lower than a threshold, or higher than or lower than another signal quality. In addition, a formula for comparing signal quality with a threshold and a formula for comparing signal quality with another signal quality may include one or more types of offset value parameters, for example, a hysteresis value, a frequency offset value of a signal, an offset value of a cell to which a signal belongs, and an offset value introduced for comparing different types of signals. The comparison formulas include common entering conditions and leaving conditions in LTE measurement conditions.

### For example:

A specific condition of signal quality being higher than a signal threshold is as follows:
an entering condition is: *M*cp - *Hys* > *Thresh*; and
a leaving condition is: *M*cp+*Hys < Thresh*, where
*M*cp represents signal quality, *Hys* is a hysteresis parameter, and *Thresh* is a threshold configured on a network side.

It should be noted that the hysteresis parameter *Hys* is merely one parameter in a first error.

Optionally, to make signal quality more accurate, more parameters may be introduced into the first error, for example:
an entering condition is: *M*cp+Opcp - *Hys > Thresh*; and
a leaving condition is: *M*cp+Opcp+*Hys* < *Thresh* , where
*M*cp represents signal quality, *Hys* is a hysteresis parameter, and *Thresh* is a threshold configured on a network side. Opcp is a signal-related parameter such as a parameter related to one or more of a transmit power, a subframe resource, a frequency priority, a cell priority, or a CSI-RS resource priority.

A specific condition of first signal quality being higher than second signal quality is as follows:
an entering condition is: *Mn*+*Ofn*+*Ocn*-*Hys*>*Mp*+*Ofp*+*Ocp*+Off ; and
a leaving condition is: *Mn*+*Ofn*+*Ocn*+*Hys*<*Mp*+*Ofp*+*Ocp*+*Off*, where
*Mn* is quality of a first signal, *Hys* is a hysteresis parameter, *Off* is an offset value configured on the network side, *Ofn* is a parameter related to a frequency of the first signal, and *Ocn* is a parameter related to a cell and/or port in which the first signal is located. Accordingly, *Mp* is signal quality of a second signal, *Ofp* is a parameter related to a frequency of the second signal, and *Ocp* is a parameter related to a cell and/or port in which the second signal is located. Certainly, when the first signal and the second signal belong to a same carrier, a carrier-related parameter may be not mentioned in the inequalities. By designing such parameters, a communications node can more flexibly decide a preset condition for measurement and reporting.

Certainly, the parameter Opcp may also be introduced into an inequality side corresponding to the first signal, and the parameter is related to the first signal, for example, related to one or more of the following factors: a transmit power, a subframe resource, a frequency priority, a cell priority, or a CSI-RS resource priority.

Variations based on all kinds of the formulas described in the present invention also fall within the protection scope of the present invention, and are not described exhaustively herein any further.

Certainly, when reference signal quality is compared between different types of signals, considering that there are many preset conditions mentioned in the present invention, no detailed description is given herein any further. Offset values of different types of reference signals may be further introduced into the formulas including the entering conditions and the leaving conditions.

The signal quality may be quality of a reference signal, or may be energy of a radio resource in one or a combination of a time domain, a frequency domain, or a space domain.

The signal quality may be represented by an RSRP (Reference Signal Receiving Power, reference signal received power), RSRQ (Reference Signal Receiving Quality, reference signal received quality), an SNR (Signal Noise Ratio, signal-to-noise ratio), an SINR (Signal to Interference plus Noise Ratio, signal to interference plus noise ratio), noise quality, signal energy, energy quality, or the like, which is not limited in the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A base station, comprising:
a receiving unit, configured to receive a first detection result sent by user equipment, wherein the first detection result comprises signal quality of an unlicensed spectrum in a first preset range and/or spectrum information in the first preset range;
an obtaining unit, configured to obtain first spectrum information;
a first determining unit, configured to determine available unlicensed spectrum information according to the first spectrum information obtained by the obtaining unit and/or the first detection result received by the receiving unit; and
a sending unit, configured to send the available unlicensed spectrum information determined by the first determining unit to the user equipment.

2. The base station according to claim 1, wherein the available unlicensed spectrum information comprises range information of an available unlicensed spectrum and/or a first reference signal in the available unlicensed spectrum.

3. The base station according to claim 1 or 2, wherein
the sending unit is further configured to send first detection configuration information to the user equipment, so that the user equipment detects the unlicensed spectrum in the first preset range according to the first detection configuration information to obtain the first measurement result.

4. The base station according to claim 3, wherein the first detection configuration information comprises a second preset range.

5. The base station according to claim 3 or 4, wherein the signal quality of the unlicensed spectrum comprises energy of the unlicensed spectrum or signal quality of a second reference signal in the unlicensed spectrum.

6. The base station according to claim 5, wherein the first detection configuration information comprises configuration information of the second reference signal, and the configuration information of the second reference signal comprises one or a combination of type information, time-frequency-space code domain information, a sequence format, or sequence parameter information of the second reference signal.

7. The base station according to any one of claims 3 to 6, wherein the first detection configuration information further comprises a first reporting condition, so that the user equipment sends the first detection result to the base station according to the first reporting condition, wherein the first reporting condition comprises one or a combination of the following:
the signal quality of the unlicensed spectrum is higher than a first preset threshold,
the signal quality of the unlicensed spectrum is lower than a second preset threshold, or
a detection period is preset.

8. The base station according to any one of claims 1 to 7, wherein
the first spectrum information comprises one or a combination of unlicensed spectrum information of another base station except the base station, unlicensed spectrum information configured by operation, administration and maintenance OAM, or unlicensed spectrum information of a wireless local area network WiFi.

9. The base station according to claim 8, wherein the first determining unit may be specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
selecting, from the candidate unlicensed spectrum information, spectrum information under a first preset condition as the available unlicensed spectrum information.

10. The base station according to claim 9, wherein the first preset condition is spectrum information of highest energy.

11. The base station according to any one of claims 1 to 10, wherein
the sending unit is further configured to send second detection configuration information to the user equipment, so that the user equipment detects signal quality of a resource section of the available unlicensed spectrum according to the second detection configuration information to obtain a second detection result;
the receiving unit is further configured to receive the second detection result sent by the user equipment; and the base station further comprises:
a processing unit, configured to perform scheduling and/or mobility management on the user equipment according to the second detection result.

12. The base station according to claim 11, wherein
the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

13. The base station according to claim 12, wherein the configuration information of the third reference signal comprises one or a combination of type information, time-frequency-space code domain information, a sequence format, or sequence-generated parameter information of the third reference signal.

14. The base station according to any one of claims 11 to 13, wherein
the sending unit may be specifically configured to:
send the second detection configuration information by using one or a combination of radio resource control protocol RRC layer signaling, a Medium Access Control MAC layer control element, a physical layer command, broadcast information, or a system message.

15. The base station according to any one of claims 12 to 14, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

16. The base station according to any one of claims 11 to 15, wherein the base station further comprises:
a selection unit, configured to select a corresponding transmit power according to one or a combination of the time domain information, the frequency domain information, the time-frequency information, or the time-frequency domain infographics; and
the processing unit comprises:
a determining subunit, configured to determine a first resource section of the available unlicensed spectrum according to the second detection result; and
a sending subunit, configured to send the first resource section to the user equipment according to the transmit power.

17. The base station according to claims 11 to 16, wherein the second detection configuration information further comprises a second reporting condition, so that the user equipment sends the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

18. The base station according to claim 17, wherein the serving cell comprises a cell of the available unlicensed spectrum and/or a configured cell, and the configured cell is a cell of an unlicensed spectrum configured in the unlicensed spectrum information configured by the OAM.

19. The base station according to claim 17, wherein the neighboring cell comprises a cell of an unlicensed spectrum that is not used by the user equipment.

20. The base station according to claim 17, wherein the first absolute threshold, the second absolute threshold, the third absolute threshold, the fourth absolute threshold, and the fifth absolute threshold are absolute values used to distinguish between different levels of cells of the unlicensed spectrum.

21. The base station according to any one of claims 11 to 20, wherein
the second detection result comprises signal quality information of the resource section in the available unlicensed spectrum, wherein the signal quality information is used to indicate the signal quality of the resource section; or
the second detection result comprises an index value corresponding to signal quality information of the resource section in the available unlicensed spectrum, wherein the signal quality information is used to indicate the signal quality of the resource section.

22. The base station according to claim 21, wherein the determining subunit may be specifically configured to:
obtain signal quality under a second preset condition according to the signal quality of the resource section in the available unlicensed spectrum; and
obtain, according to the signal quality under the second preset condition, a resource section that is of the available unlicensed spectrum and corresponding to the signal quality under the second preset condition, and use the resource section as the first resource section of the unlicensed spectrum; or
obtain signal quality under a third preset condition according to the index value corresponding to the signal quality information of the resource section in the available unlicensed spectrum; and
obtain, according to an index value under the third preset condition, a resource section that is of the available unlicensed spectrum and corresponding to the index value under the third preset condition, and use the resource section as the first resource section of the unlicensed spectrum.

23. The base station according to claim 22, wherein
the signal quality is an interference ratio, the second preset condition is an interference ratio range, and the third preset condition is an index value range corresponding to the interference ratio range.

24. User equipment, comprising:
a first detection unit, configured to detect unlicensed spectrum information in a first preset range according to first detection configuration information to obtain a first detection result, wherein the first detection result comprises signal quality of the unlicensed spectrum and/or spectrum information in the first preset range;
a sending unit, configured to send the first detection result obtained by the first detection unit to a base station, so that the base station determines available unlicensed spectrum information according to first spectrum information and the first detection result after obtaining the first spectrum information; and
a receiving unit, configured to receive the available unlicensed spectrum information sent by the base station.

25. The user equipment according to claim 24, wherein the available unlicensed spectrum information comprises range information of an available unlicensed spectrum and/or a first reference signal in the available unlicensed spectrum.

26. The user equipment according to claim 24 or 25, wherein the signal quality of the unlicensed spectrum comprises energy of the unlicensed spectrum or signal quality of a second reference signal in the unlicensed spectrum.

27. The user equipment according to claim 26, wherein the first detection configuration information comprises configuration information of the second reference signal, and the configuration information of the second reference signal comprises one or a combination of type information, time-frequency-space code domain information, a sequence format, or sequence parameter information of the second reference signal.

28. The user equipment according to any one of claims 25 to 27, wherein the first detection configuration information comprises a second preset range.

29. The user equipment according to any one of claims 24 to 28, wherein the first detection information further comprises a first reporting condition, and the first reporting condition comprises one or a combination of the following:
the signal quality of the unlicensed spectrum is higher than a first preset threshold,
the signal quality of the unlicensed spectrum is lower than a second preset threshold, or
a detection period is preset.

30. The user equipment according to claim 29, wherein the first detection configuration information is configuration information that is preset by the user equipment or configuration information that is preset by the base station.

31. The user equipment according to claim 30, wherein when the first detection configuration information is the configuration information that is preset by the base station,
the receiving unit is further configured to receive the first detection configuration information sent by the base station.

32. The user equipment according to any one of claims 24 to 31, wherein
the receiving unit is configured to receive second detection configuration information sent by the base station, wherein the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and the user equipment further comprises:
a second detection unit, configured to detect, according to the second detection configuration information received by the receiving unit, a resource section of the available unlicensed spectrum to obtain a second detection result.

33. The user equipment according to claim 32, wherein
the receiving unit may be specifically configured to:
receive the second detection configuration information that is sent by the base station by using one or a combination of RRC layer signaling, a MAC layer control element, a physical layer command, broadcast information, or a system message.

34. The user equipment according to claim 32 or 33, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

35. The user equipment according to any one of claims 32 to 34, wherein
the sending unit is configured to send the second detection result to the base station, so that the base station determines a first resource section in the available unlicensed spectrum according to the second measurement result; and
the receiving unit is configured to receive the first resource section sent by the base station; and the user equipment further comprises:
a transmission unit, configured to perform data transmission on the first resource section.

36. The user equipment according to claim 35, wherein the second detection configuration information further comprises a second reporting condition; and
the sending unit may be specifically configured to:
send the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold, signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

37. The user equipment according to claim 36, wherein the serving cell comprises a cell of the available unlicensed spectrum and/or a configured cell, and the configured cell is a cell of an unlicensed spectrum configured in the unlicensed spectrum information configured by the OAM.

38. The user equipment according to claim 36, wherein the neighboring cell comprises a cell of an unlicensed spectrum that is not used by the user equipment.

39. The user equipment according to claim 36, wherein the first absolute threshold, the second absolute threshold, the third absolute threshold, the fourth absolute threshold, and the fifth absolute threshold are absolute values used to distinguish between different levels of cells of the unlicensed spectrum.

40. The user equipment according to any one of claims 32 to 39, wherein when the second detection configuration information comprises one or a combination of the following: one or more types of time domain information of the available unlicensed spectrum, multiple pieces of frequency domain information of the available unlicensed spectrum, one or more types of time-frequency information of the available unlicensed spectrum, or one or more sets of time-frequency domain infographics of the available unlicensed spectrum,
the second detection unit may be specifically configured to:
determine a to-be-detected resource section of the available unlicensed spectrum according to one or a combination of the following: one or more types of time domain information of the available unlicensed spectrum, multiple pieces of frequency domain information of the available unlicensed spectrum, one or more types of time-frequency information of the available unlicensed spectrum, or one or more sets of time-frequency domain infographics of the available unlicensed spectrum;
detect signal quality of the resource section of the available unlicensed spectrum;
and
use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the available unlicensed spectrum according to the second detection result.

41. The user equipment according to any one of claims 32 to 39, wherein when the second detection configuration information comprises the configuration information of the third reference signal,
the second detection unit may be specifically configured to:
determine, according to the configuration information of the third reference signal, a resource section that is of the available unlicensed spectrum and in which the third reference signal is located;
detect signal quality of the third reference signal in the resource section of the available unlicensed spectrum; and
use the signal quality of the third reference signal in the resource section of the available unlicensed spectrum as the second detection result, so that the base station determines the first resource section of the available unlicensed spectrum according to the second detection result, or
use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

42. The user equipment according to claim 40 or 41, wherein the sending unit may be specifically configured to:
send the second configuration result to the base station by using one or a combination of RRC layer signaling, a MAC layer control element, a physical layer command, broadcast information, or a system message of the user equipment.

43. A base station, comprising:
a receiver, configured to receive a first detection result sent by user equipment, wherein the first detection result comprises signal quality of an unlicensed spectrum in a first preset range and/or spectrum information in the first preset range;
a processor, configured to obtain first spectrum information, wherein
the processor is further configured to determine available unlicensed spectrum information according to the first spectrum information and/or the first detection result; and
a transmitter, configured to send the available unlicensed spectrum information to the user equipment.

44. The base station according to claim 43, wherein the available unlicensed spectrum information comprises range information of an available unlicensed spectrum and/or a first reference signal in the available unlicensed spectrum.

45. The base station according to claim 43 or 44, wherein
the transmitter is further configured to send first detection configuration information to the user equipment, so that the user equipment detects the unlicensed spectrum in the first preset range according to the first detection configuration information to obtain the first measurement result.

46. The base station according to claim 45, wherein the first detection configuration information comprises a second preset range.

47. The base station according to claim 45 or 46, wherein the signal quality of the unlicensed spectrum comprises energy of the unlicensed spectrum or signal quality of a second reference signal in the unlicensed spectrum.

48. The base station according to claim 47, wherein the first detection configuration information comprises configuration information of the second reference signal, and the configuration information of the second reference signal comprises one or a combination of type information, time-frequency-space code domain information, a sequence format, or sequence parameter information of the second reference signal.

49. The base station according to any one of claims 45 to 48, wherein the first detection configuration information further comprises a first reporting condition, so that the user equipment sends the first detection result to the base station according to the first reporting condition, wherein the first reporting condition comprises one or a combination of the following:
the signal quality of the unlicensed spectrum is higher than a first preset threshold,
the signal quality of the unlicensed spectrum is lower than a second preset threshold, or
a detection period is preset.

50. The base station according to any one of claims 42 to 49, wherein
the first spectrum information comprises one or a combination of unlicensed spectrum information of another base station except the base station, unlicensed spectrum information configured by an OAM, or unlicensed spectrum information of WiFi.

51. The base station according to claim 50, wherein the processor may be specifically configured to:
select candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
select, from the candidate unlicensed spectrum information, spectrum information under a first preset condition as the available unlicensed spectrum information.

52. The base station according to claim 51, wherein the first preset condition is spectrum information of highest energy.

53. The base station according to any one of claims 43 to 52, wherein the base station further comprises the following:
the transmitter is further configured to send second detection configuration information to the user equipment, so that the user equipment detects signal quality of a resource section of the available unlicensed spectrum according to the second detection configuration information to obtain a second detection result;
the receiver is further configured to receive the second detection result sent by the user equipment;
the processor is configured to determine a first resource section of the available unlicensed spectrum according to the second detection result; and
the transmitter is further configured to send the first resource section to the user equipment according to a transmit power, so as to perform scheduling and/or mobility management on the user equipment.

54. The base station according to claim 53, wherein
the second detection configuration information comprises one or a combination of the following: one or more types of time domain information of the available unlicensed spectrum, multiple pieces of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

55. The base station according to claim 53, wherein the configuration information of the third reference signal comprises one or a combination of type information, time-frequency-space code domain information, a sequence format, or sequence-generated parameter information of the third reference signal.

56. The base station according to any one of claims 53 to 55, wherein the transmitter may be specifically configured to:
send the second detection configuration information by using one or a combination of RRC layer signaling, a MAC layer control element, a physical layer command, broadcast information, or a system message.

57. The base station according to any one of claims 54 to 56, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

58. The base station according to any one of claims 53 to 57, wherein
the processor is further configured to select a corresponding transmit power according to one or a combination of the time domain information, the frequency domain information, the time-frequency information, or the time-frequency domain infographics;
the processor is further configured to determine a first resource section of the available unlicensed spectrum according to the second detection result; and
the processor is further configured to send the first resource section to the user equipment according to the transmit power.

59. The base station according to any one of claims 53 to 58, wherein the second detection configuration information further comprises a second reporting condition, so that the user equipment sends the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

60. The base station according to claim 59, wherein the serving cell comprises a cell of the available unlicensed spectrum and/or a configured cell, and the configured cell is a cell of an unlicensed spectrum configured in the unlicensed spectrum information configured by the OAM.

61. The base station according to claim 59, wherein the neighboring cell comprises a cell of an unlicensed spectrum that is not used by the user equipment.

62. The base station according to claim 59, wherein the first absolute threshold, the second absolute threshold, the third absolute threshold, the fourth absolute threshold, and the fifth absolute threshold are absolute values used to distinguish between different levels of cells of the unlicensed spectrum.

63. The base station according to any one of claims 53 to 62, wherein
the second detection result comprises signal quality information of the resource section in the available unlicensed spectrum, wherein the signal quality information is used to indicate the signal quality of the resource section; or
the second detection result comprises an index value corresponding to signal quality information of the resource section in the available unlicensed spectrum, wherein the signal quality information is used to indicate the signal quality of the resource section.

64. The base station according to claim 63, wherein the processor may be specifically configured to:
obtain signal quality under a second preset condition according to the signal quality of the resource section in the available unlicensed spectrum; and
obtain, according to the signal quality under the second preset condition, a resource section that is of the available unlicensed spectrum and corresponding to the signal quality under the second preset condition, and use the resource section as the first resource section of the unlicensed spectrum; or
obtain signal quality under a third preset condition according to the index value corresponding to the signal quality information of the resource section in the available unlicensed spectrum; and
obtain, according to an index value under the third preset condition, a resource section that is of the available unlicensed spectrum and corresponding to the index value under the third preset condition, and use the resource section as the first resource section of the unlicensed spectrum.

65. The base station according to claim 64, wherein
the signal quality is an interference ratio, the second preset condition is an interference ratio range, and the third preset condition is an index value range corresponding to the interference ratio range.

66. User equipment, comprising:
a processor, configured to detect unlicensed spectrum information in a first preset range according to first detection configuration information to obtain a first detection result, wherein the first detection result comprises signal quality of the unlicensed spectrum and/or spectrum information in the first preset range;
a transmitter, configured to send the first detection result to a base station, so that the base station determines available unlicensed spectrum information according to first spectrum information and the first detection result after obtaining the first spectrum information; and
a receiver, configured to receive the available unlicensed spectrum information sent by the base station.

67. The user equipment according to claim 66, wherein the available unlicensed spectrum information comprises range information of an available unlicensed spectrum and/or a first reference signal in the available unlicensed spectrum.

68. The user equipment according to claim 66 or 67, wherein the signal quality of the unlicensed spectrum comprises energy of the unlicensed spectrum or signal quality of a second reference signal in the unlicensed spectrum.

69. The user equipment according to claim 68, wherein the first detection configuration information comprises configuration information of the second reference signal, and the configuration information of the second reference signal comprises one or a combination of type information, time-frequency-space code domain information, a sequence format, or sequence parameter information of the second reference signal.

70. The user equipment according to any one of claims 67 to 69, wherein the first detection configuration information comprises a second preset range.

71. The user equipment according to any one of claims 66 to 70, wherein the first detection information further comprises a first reporting condition, and the first reporting condition comprises one or a combination of the following:
the signal quality of the unlicensed spectrum is higher than a first preset threshold,
the signal quality of the unlicensed spectrum is lower than a second preset threshold, or
a detection period is preset.

72. The user equipment according to claim 71, wherein the first detection configuration information is configuration information that is preset by the user equipment or configuration information that is preset by the base station.

73. The user equipment according to claim 72, wherein when the first detection configuration information is the configuration information that is preset by the base station,
the receiver is further configured to receive the first detection configuration information sent by the base station.

74. The user equipment according to any one of claims 66 to 73, wherein the user equipment further comprises the following:
the receiver is further configured to receive second detection configuration information sent by the base station, wherein the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and
the processor is further configured to detect a resource section of the available unlicensed spectrum according to the second detection configuration information to obtain a second detection result.

75. The user equipment according to claim 74, wherein
the receiver may be specifically configured to:
receive the second detection configuration information that is sent by the base station by using one or a combination of RRC layer signaling, a MAC layer control element, a physical layer command, broadcast information, or a system message.

76. The user equipment according to claim 74 or 75, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

77. The user equipment according to any one of claims 74 to 76, wherein the user equipment further comprises the following:
the transmitter is further configured to send the second detection result to the base station, so that the base station determines a first resource section in the available unlicensed spectrum according to the second measurement result;
the receiver is further configured to receive the first resource section sent by the base station; and
the processor is further configured to perform data transmission on the first resource section.

78. The user equipment according to claim 77, wherein the second detection configuration information further comprises a second reporting condition; and
the transmitter may be specifically configured to:
send the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold, signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

79. The user equipment according to claim 78, wherein the serving cell comprises a cell of the available unlicensed spectrum and/or a configured cell, and the configured cell is a cell of an unlicensed spectrum configured in the unlicensed spectrum information configured by the OAM.

80. The user equipment according to claim 78, wherein the neighboring cell comprises a cell of an unlicensed spectrum that is not used by the user equipment.

81. The user equipment according to claim 78, wherein the first absolute threshold, the second absolute threshold, the third absolute threshold, the fourth absolute threshold, and the fifth absolute threshold are absolute values used to distinguish between different levels of cells of the unlicensed spectrum.

82. The user equipment according to any one of claims 74 to 81, wherein when the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum,
the processor may be specifically configured to:
determine a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detect signal quality of the resource section of the available unlicensed spectrum;
and
use the signal quality of the resource section of the available unlicensed spectrum as the second detection result, or use an index value corresponding to the signal quality of the resource section of the available unlicensed spectrum as the second detection result according to a preset correspondence between an index value and signal quality information, so that the base station determines the first resource section of the available unlicensed spectrum according to the second detection result.

83. The user equipment according to any one of claims 74 to 81, wherein when the second detection configuration information comprises the configuration information of the third reference signal,
the processor may be specifically configured to:
determine, according to the configuration information of the third reference signal, a resource section that is of the available unlicensed spectrum and in which the third reference signal is located;
detect signal quality of the third reference signal in the resource section of the available unlicensed spectrum; and
use the signal quality of the third reference signal in the resource section of the available unlicensed spectrum as the second detection result, so that the base station determines the first resource section of the available unlicensed spectrum according to the second detection result, or
use an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

84. The user equipment according to claim 82 or 83, wherein the transmitter may be specifically configured to:
send the second configuration result to the base station by using one or a combination of RRC layer signaling, a MAC layer control element, a physical layer command, broadcast information, or a system message of the user equipment.

85. A resource obtaining method, applied to a base station, comprising:
receiving a first detection result sent by user equipment, wherein the first detection result comprises signal quality of an unlicensed spectrum in a first preset range and/or spectrum information in the first preset range;
obtaining first spectrum information;
determining available unlicensed spectrum information according to the first spectrum information and/or the first detection result; and
sending the available unlicensed spectrum information to the user equipment.

86. The resource obtaining method according to claim 85, wherein the available unlicensed spectrum information comprises range information of an available unlicensed spectrum and/or a first reference signal in the available unlicensed spectrum.

87. The resource obtaining method according to claim 85 or 86, wherein before the receiving a first detection result sent by user equipment, the resource obtaining method further comprises:
sending first detection configuration information to the user equipment, so that the user equipment detects the unlicensed spectrum in the first preset range according to the first detection configuration information to obtain the first measurement result.

88. The resource obtaining method according to claim 87, wherein the first detection configuration information comprises a second preset range.

89. The resource obtaining method according to claim 87 or 88, wherein the signal quality of the unlicensed spectrum comprises energy of the unlicensed spectrum or signal quality of a second reference signal in the unlicensed spectrum.

90. The resource obtaining method according to claim 89, wherein the first detection configuration information comprises configuration information of the second reference signal, and the configuration information of the second reference signal comprises one or a combination of type information, time-frequency-space code domain information, a sequence format, or sequence parameter information of the second reference signal.

91. The resource obtaining method according to any one of claims 87 to 90, wherein the first detection configuration information further comprises a first reporting condition, so that the user equipment sends the first detection result to the base station when the first reporting condition is met, wherein the first reporting condition comprises one or a combination of the following:
the signal quality of the unlicensed spectrum is higher than a first preset threshold,
the signal quality of the unlicensed spectrum is lower than a second preset threshold, or
a detection period is preset.

92. The resource obtaining method according to any one of claims 84 to 91,
wherein
the first spectrum information comprises one or a combination of unlicensed spectrum information of another base station except the base station, unlicensed spectrum information configured by an OAM, or unlicensed spectrum information of WiFi.

93. The resource obtaining method according to claim 92, wherein the determining available unlicensed spectrum information according to the first spectrum information and/or the first detection result comprises:
selecting candidate unlicensed spectrum information from unlicensed spectrum information in the second preset range according to one or a combination of the unlicensed spectrum information of the another base station except the base station, the unlicensed spectrum information configured by the OAM, the unlicensed spectrum information of the WiFi, or the first detection result; and
selecting, from the candidate unlicensed spectrum information, spectrum information under a first preset condition as the available unlicensed spectrum information.

94. The resource obtaining method according to claim 93, wherein the first preset condition is spectrum information of highest energy.

95. The resource obtaining method according to any one of claims 85 to 94, wherein after the sending the available unlicensed spectrum information to the user equipment, the resource obtaining method further comprises:
sending second detection configuration information to the user equipment, so that the user equipment detects signal quality of a resource section of the available unlicensed spectrum according to the second detection configuration information to obtain a second detection result;
receiving the second detection result sent by the user equipment; and
performing scheduling and/or mobility management on the user equipment according to the second detection result.

96. The resource obtaining method according to claim 95, wherein
the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum.

97. The resource obtaining method according to claim 96, wherein the configuration information of the third reference signal comprises one or a combination of type information, time-frequency-space code domain information, a sequence format, or sequence-generated parameter information of the third reference signal.

98. The resource obtaining method according to any one of claims 95 to 97, wherein the sending second detection configuration information to the user equipment comprises:
sending the second detection configuration information by using one or a combination of RRC layer signaling, a MAC layer control element, a physical layer command, broadcast information, or a system message.

99. The resource obtaining method according to any one of claims 95 to 98, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

100. The resource obtaining method according to any one of claims 95 to 99, wherein before the receiving, according to a transmit power, the second detection result sent by the user equipment, the resource obtaining method further comprises:
selecting a corresponding transmit power according to one or a combination of the time domain information, the frequency domain information, the time-frequency information, or the time-frequency domain infographics; and
the performing scheduling and/or mobility management on the user equipment according to the second detection result comprises:
determining a first resource section of the available unlicensed spectrum according to the second detection result; and
sending the first resource section to the user equipment according to the transmit power.

101. The resource obtaining method according to any one of claims 95 to 100, wherein the second detection configuration information further comprises a second reporting condition, so that the user equipment sends the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold,
signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

102. The resource obtaining method according to claim 101, wherein the serving cell comprises a cell of the available unlicensed spectrum and/or a configured cell, and the configured cell is a cell of an unlicensed spectrum configured in the unlicensed spectrum information configured by the OAM.

103. The resource obtaining method according to claim 101, wherein the neighboring cell comprises a cell of an unlicensed spectrum that is not used by the user equipment.

104. The resource obtaining method according to claim 101, wherein the first absolute threshold, the second absolute threshold, the third absolute threshold, the fourth absolute threshold, and the fifth absolute threshold are absolute values used to distinguish between different levels of cells of the unlicensed spectrum.

105. The resource obtaining method according to any one of claims 95 to 104,
wherein
the second detection result comprises signal quality information of the resource section in the available unlicensed spectrum, wherein the signal quality information is used to indicate the signal quality of the resource section; or
the second detection result comprises an index value corresponding to signal quality information of the resource section in the available unlicensed spectrum, wherein the signal quality information is used to indicate the signal quality of the resource section.

106. The resource obtaining method according to claim 105, wherein the determining a first resource section of the available unlicensed spectrum according to the second detection result comprises:
obtaining signal quality under a second preset condition according to the signal quality of the resource section in the available unlicensed spectrum; and
obtaining, according to the signal quality under the second preset condition, a resource section that is of the available unlicensed spectrum and corresponding to the signal quality under the second preset condition, and using the resource section as the first resource section of the unlicensed spectrum; or
obtaining, signal quality under a third preset condition according to the index value corresponding to the signal quality information of the resource section in the available unlicensed spectrum; and
obtaining, according to an index value under the third preset condition, a resource section that is of the available unlicensed spectrum and corresponding to the index value under the third preset condition, and using the resource section as the first resource section of the unlicensed spectrum.

107. The resource obtaining method according to claim 106, wherein
the signal quality is an interference ratio, the second preset condition is an interference ratio range, and the third preset condition is an index value range corresponding to the interference ratio range.

108. A resource obtaining method, applied to user equipment, comprising:
detecting unlicensed spectrum information in a first preset range according to first detection configuration information to obtain a first detection result, wherein the first detection result comprises signal quality of the unlicensed spectrum and/or spectrum information in the first preset range;
sending the first detection result to a base station, so that the base station determines available unlicensed spectrum information according to first spectrum information and the first detection result after obtaining the first spectrum information; and
receiving the available unlicensed spectrum information sent by the base station.

109. The resource obtaining method according to claim 108, wherein the available unlicensed spectrum information comprises range information of an available unlicensed spectrum and/or a first reference signal in the available unlicensed spectrum.

110. The resource obtaining method according to claim 108 or 109, wherein the signal quality of the unlicensed spectrum comprises energy of the unlicensed spectrum, or signal quality of a second reference signal in the unlicensed spectrum.

111. The resource obtaining method according to claim 110, wherein the first detection configuration information comprises configuration information of the second reference signal, and the configuration information of the second reference signal comprises one or a combination of type information, time-frequency-space code domain information, a sequence format, or sequence parameter information of the second reference signal.

112. The resource obtaining method according to any one of claims 109 to 111, wherein the first detection configuration information comprises a second preset range.

113. The resource obtaining method according to any one of claims 108 to 112, wherein the first detection information further comprises a first reporting condition, and
the sending the first detection result to a base station comprises:
sending the first detection result to the base station when the first detection information is met, wherein the first reporting condition comprises one or a combination of the following:
the signal quality of the unlicensed spectrum is higher than a first preset threshold,
the signal quality of the unlicensed spectrum is lower than a second preset threshold, or
a detection period is preset.

114. The resource obtaining method according to claim 113, wherein the first detection configuration information is configuration information that is preset by the user equipment or configuration information that is preset by the base station.

115. The resource obtaining method according to claim 114, wherein when the first detection configuration information is the configuration information that is preset by the base station, and
before the detecting unlicensed spectrum information in a first preset range according to first detection configuration information to obtain a first detection result, the resource detection method further comprises:
receiving the first detection configuration information sent by the base station.

116. The resource obtaining method according to any one of claims 108 to 115, wherein after the receiving the available unlicensed spectrum information sent by the base station, the resource obtaining method further comprises:
receiving second detection configuration information sent by the base station, wherein the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, one or more sets of time-frequency domain infographics of the available unlicensed spectrum, or configuration information of a third reference signal in the available unlicensed spectrum; and
detecting a resource section of the available unlicensed spectrum according to the second detection configuration information to obtain a second detection result.

117. The resource obtaining method according to claim 119, wherein the receiving second detection configuration information sent by the base station comprises:
receiving the second detection configuration information that is sent by the base station by using one or a combination of RRC layer signaling, a MAC layer control element, a physical layer command, broadcast information, or a system message.

118. The resource obtaining method according to claim 116 or 117, wherein time-domain indication information is used to indicate either or both of duration information and time determining information of the available unlicensed spectrum, the time determining information is used to indicate whether current time is within time of detecting the available unlicensed spectrum, and the time-domain indication information comprises one or a combination of the time-frequency-space code domain information, the time domain information, the time-frequency information, or the time-frequency domain infographics.

119. The resource obtaining method according to any one of claims 116 to 118, wherein after the detecting a resource section of the available unlicensed spectrum according to the second detection configuration information to obtain a second detection result, the resource obtaining method further comprises:
sending the second detection result to the base station, so that the base station determines a first resource section in the available unlicensed spectrum according to the second measurement result;
receiving the first resource section sent by the base station; and
performing data transmission on the first resource section.

120. The resource obtaining method according to claim 119, wherein the second detection configuration information further comprises a second reporting condition;
and
the sending the second detection result to the base station comprises:
sending the second detection result to the base station when the second reporting condition is met, wherein the second reporting condition comprises one or a combination of the following:
signal quality of a serving cell is higher than a first absolute threshold,
the signal quality of the serving cell is lower than a second absolute threshold, signal quality of a neighboring cell is higher than the signal quality of the serving cell by a preset offset value,
the signal quality of the neighboring cell is higher than a third absolute threshold,
the signal quality of the serving cell is lower than a fourth absolute threshold and the signal quality of the neighboring cell is higher than a fifth absolute threshold, or
the signal quality of the neighboring cell is higher than the signal quality of the serving cell.

121. The resource obtaining method according to claim 120, wherein the serving cell comprises a cell of the available unlicensed spectrum and/or a configured cell, and the configured cell is a cell of an unlicensed spectrum configured in the unlicensed spectrum information configured by the OAM.

122. The resource obtaining method according to claim 120, wherein the neighboring cell comprises a cell of an unlicensed spectrum that is not used by the user equipment.

123. The resource obtaining method according to claim 120, wherein the first absolute threshold, the second absolute threshold, the third absolute threshold, the fourth absolute threshold, and the fifth absolute threshold are absolute values used to distinguish between different levels of cells of the unlicensed spectrum.

124. The resource obtaining method according to any one of claims 116 to 123, wherein when the second detection configuration information comprises one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum,
the detecting a resource section of the available unlicensed spectrum according to the second detection configuration information to obtain a second detection result comprises:
determining a to-be-detected resource section of the available unlicensed spectrum according to one or a combination of the following: one or more types of time domain information of the available unlicensed spectrum, one or more types of frequency domain information of the available unlicensed spectrum, one or more types of time-frequency information of the available unlicensed spectrum, or one or more sets of time-frequency domain infographics of the available unlicensed spectrum;
detecting signal quality of the resource section of the available unlicensed spectrum; and
using the signal quality of the resource section of the available unlicensed spectrum as the second detection result, or using an index value corresponding to the signal quality of the resource section of the available unlicensed spectrum as the second detection result according to a preset correspondence between an index value and signal quality information, so that the base station determines the first resource section of the available unlicensed spectrum according to the second detection result.

125. The resource obtaining method according to any one of claims 116 to 123, wherein when the second detection configuration information comprises the configuration information of the third reference signal,
the detecting a resource section of the available unlicensed spectrum according to the second detection configuration information to obtain a second detection result comprises:
determining, according to the configuration information of the third reference signal, a resource section that is of the available unlicensed spectrum and in which the third reference signal is located;
detecting signal quality of the third reference signal in the resource section of the available unlicensed spectrum; and
using the signal quality of the third reference signal in the resource section of the available unlicensed spectrum as the second detection result, so that the base station determines the first resource section of the available unlicensed spectrum according to the second detection result, or
using an index value corresponding to the signal quality of the third reference signal in the resource section of the available unlicensed spectrum as the second detection result according to a preset correspondence between an index value and signal quality information, so that the base station determines the first resource section of the available unlicensed spectrum according to the second detection result.

126. The resource obtaining method according to claim 124 or 125, wherein the sending the second detection result to the base station comprises:
sending the second configuration result to the base station by using one or a combination of RRC layer signaling, a MAC layer control element, a physical layer command, broadcast information, or a system message of the user equipment.

127. A resource obtaining system, comprising:
the base station according to any one of claims 1 to 23 or the base station according to any one of claims 43 to 65; and
the user equipment according to any one of claims 24 to 42 or the user equipment according to any one of claims 66 to 84.
